# EUROPÄISCHE PATENTSCHRIFT

(11) **EP 3 562 768 B1**
(45) Veröffentlichungstag und Bekanntmachung des Hinweises auf die Patenterteilung: **09.11.2022**
(21) Anmeldenummer: 18702685.1
(22) Anmeldetag: 31.01.2018
(51) Int. Cl.: B65G 47/88, H01F 7/16

(54) **ELEKTROMAGNETISCHER STOPPER FÜR EINE STÜCKGUT-FÖRDERANLAGE**
ELECTROMAGNETIC STOPPER FOR AN ARTICLE CONVEYOR SYSTEM
ÉLÉMENT D'ARRÊT ÉLECTROMAGNÉTIQUE POUR UNE INSTALLATION DE TRANSPORT DE MARCHANDISES

(30) Priorität: 01.02.2017 DE 102017000907
(43) Veröffentlichungstag der Anmeldung: 06.11.2019
(73) Patentinhaber: Rhefor GbR, 12203 Berlin (DE)
(72) Erfinder: MECKLENBURG, Arno, 10999 Berlin (DE)
(74) Vertreter: Behr, Wolfgang
(86) Internationale Anmeldenummer: PCT/EP2018/052443
(87) Internationale Veröffentlichungsnummer: WO 2018/141817

(56) Entgegenhaltungen:
- EP-A1- 0 794 540
- EP-A1- 2 428 472
- WO-A1-2008/135670
- DE-A1- 2 835 404
- GB-A- 2 357 375
- US-A1- 2015 062 770

## Beschreibung

Die vorliegende Erfindung betrifft einen elektromagnetischen Stopper zum Stoppen und/oder Vereinzeln von auf einer kontinuierlich betriebenen Stückgut-Förderanlage geförderten Stückgut-Trägern und/oder Stückgut.

Kontinuierlich betriebene Stückgut-Förderanlagen werden beispielsweise zu innerbetrieblichen Verkettung eingesetzt, insbesondere um Werkstücke von einer Bearbeitungsstation zur nächsten zu transportieren. Solche Stückgut-Förderanlagen weisen üblicherweise eine Förderstrecke auf, auf welcher Stückgut-Träger und/oder Stückgut transportiert werden. Die Förderstrecke läuft hierzu kontinuierlich und nimmt auf ihr abgestellte Stückgutträger oder Stückgut mit, insbesondere durch Reibung. Um die Stückgutträger oder das Stückgut zu stoppen, werden Stopper genutzt, welche das Fördergut auf dem Förderer zurück halten und dieses bei Bedarf zum Weiterfördern frei geben.

Hierfür weisen Stopper für Stückgut-Förderanlagen üblicherweise einen Nocken auf, welche über einen Antrieb ein- und ausgefahren werden kann. Durch Ausfahren des Nocken wird dieser in den Transportweg des Fördergutes gefahren, und hält dieses zurück. Durch Einfahren des Nocken wird das Fördergut wieder frei gegeben.

Das Ein- und Ausfahren der Nocken erfolgt häuft pneumatisch. Dies hat den Nachteil, dass eine Pneumatik-Versorgung vorgesehen werden muss.

Es sind auch bereits elektromagnetische Stopper bekannt, bei welchen der Nocken über einen monostabilen Hubmagneten ausgefahren wird. Der Einsatz eines monostabilen Hubmagneten hat den Vorteil, dass bei einem Ausfall der Spannungsversorgung und/oder einem Defekt der Elektronik der Nocken automatisch ausgefahren wird. Hierdurch wird verhindert, dass durch einen defekten Stopper Stückgut ungewollt weiter befördert wird. Der Einsatz eines monostabilen Hubmagneten hat jedoch den Nachteil, dass hohe Ströme notwendig sind, um den Nocken in der eingefahrenen Position zu halten.

Druckschrift DE 28 35 404 A1 zeigt einen Stopper nach dem Oberbegriff des Anspruchs 1 und ein Verfahren zum Bevorraten und Ausgeben von Gegenständen in Form von Warenpackungen, Stückwaren od. dgl., bei dem die Gegenstände parallel hintereinander in einer Reihe auf einer Auflage angeordnet und der Einwirkung einer Vorschubkraft unterworfen werden, die sie in Richtung auf einen Widerstand am Ende der Unterstützung vorwärts zu bewegen sucht, wobei jeweils der vorderste Gegenstand der Reihe einer Bewegung zum Verlassen der Unterstützung unterworfen wird. Die Auflage ist eine bis zu ihrem Vorderende frei durchgehende und dort in einer Kippkante endende Gleitbahn und das Rückhalteorgan ist mittels eines fernbetätigbaren Antriebs in Höhenrichtung quer zur Auflage bewegbar und dabei für einen definierten Zeitraum (Öffnungszeit) aus der Ruheposition in eine Position unterhalb der Oberseite der Auflage absenkbar. Als Antrieb wird ein Elektromagnet vorgeschlagen, welcher nach dem Abschalten durch eine Druckfeder selbsttätig wieder in die Ruheposition zurückgeführt wird.

GB 2 357 375 A, US 2015/062770 A1, WO 2008/135670 A1 und EP 794 540 A1 zeigen jeweils bistabile Hubmagnete.

EP 2 428 472 A1 zeigt einen Vereinzler mit einem einen Stößel tragenden Schlitten, wobei der Schlitten und mindestens ein Stellglied in einem Gehäuse gelagert ist und wobei das Stellglied auf den beweglichen Schlitten wirkt, um den Stößel zwischen einer eingefahrenen und einer ausgefahrenen Stellung zu bewegen. Dabei besteht das Stellglied aus einer elektrisch bestrombaren Tauchspule und einem Topfmagnet. Das Stellglied ist in beide Schubrichtungen elektrisch antreibbar und wird in seinen Endlagen jeweils permanentmagnetisch gehalten.

Aufgabe der vorliegenden Erfindung ist es, einen verbesserten elektromagnetischen Stopper zur Verfügung zu stellen.

Diese Aufgabe wird durch einen elektromagnetischen Stopper gemäß Anspruch 1 gelöst. Bevorzugte Ausgestaltungen der vorliegenden Erfindung sind im Gegenstand der Unteransprüche.

Die vorliegende Erfindung umfasst einen elektromagnetischen Stopper zum Stoppen und/oder Vereinzeln von auf einer kontinuierlich betriebenen Stückgut-Förderanlage geförderten Stückgut-Trägern und/oder Stückgut, umfassend:
- einen bistabilen Hubmagneten mit mindestens einer Spule und mindestens einem Permanentmagneten;
- einen Nocken, welcher mit Hilfe des Hubmagneten ein- und ausgefahren werden kann,
- einen oder mehrere elektrische Energiespeicher, insbesondere Kondensatoren,
- eine Steuerung, welche mit Hilfe von Schaltern den oder die Energiespeicher über die mindestens eine Spule des Hubmagneten so entlädt, dass der Nocken ausgefahren wird.

Durch den Einsatz eines bistabilen Hubmagneten und die Energiespeicher wird ein sehr viel energiesparenderer Betrieb des Stoppers möglich.

In einer möglichen Ausführungsform der vorliegenden Erfindung weist der bistabile Hubmagnet zwei Hubendlagen auf. Eine erste Hubendlage entspricht bevorzugt der komplett eingefahrenen Position des Nocken, die zweite Hubendlage der komplett ausgefahrenen Position des Nocken. In der komplett ausgefahrenen Position blockiert der Nocken bevorzugt die Förderstrecke der Stückgut-Förderanlage, in der komplett eingefahrenen Position gibt der Nocken die Förderstrecke bevorzugt frei.

Bevorzugt ist ein Federsystem vorgesehen, welches einen oder mehrere Anker des bistabilen Hubmagneten aus den Hubendlagen heraus in Richtung einer Hubmittellage vorspannt. Das Federsystem erhöht die Kraft des Hubmagneten und erlaubt einen energiesparenden Betrieb. Das Federsystem kann in dem Hubmagneten verbaut sein, oder extern zu dem Hubmagneten als ein weiterer Bestandteil des Stoppers ausgeführt sein.

Bevorzugt unterscheidet sich die in den beiden Hubendlagen im Stopper gespeicherte potentielle Energie ausschließlich der elektrischen Energie und im unbestromten Fall um nicht um mehr als 50% des größeren Wertes voneinander, bevorzugt um nicht mehr als 25%. Für die Berechnung der potentiellen Energie wird die elektrische Energie unberücksichtigt gelassen, und der unbestromte Fall betrachtet. Die potentielle Energie ergibt sich daher zunächst aus der durch die Federn und Permanentmagnete gespeicherten potentiellen Energie. Für den Fall, dass der Nocken in vertikaler Richtung bewegt wird, wird bei der Berechnung der potentiellen Energie, welche im Stopper gespeichert ist, beovrzugt auch die potentiellen Energie des Nocken aufgrund der Schwerkraft berücksichtigt.

In einer möglichen Ausführungsform ist vorgesehen, dass der bistabile Hubmagnet eine asymmetrische Kennlinie aufweist. Insbesondere kann die Kraft und/oder Beschleunigung des Hubmagneten bei einer Einfahrbewegung aus der komplett ausgefahrenen Position des Nocken größer sein als bei einer Einfahrbewegung aus der komplett eingefahrenenen Position.

In einer weiteren möglichen Ausführungsform ist vorgesehen, dass wobei die magnetische Haltekraft des Hubmagneten in derjenigen Hubendlage am höchsten ist, in welcher sich der Nocken des Stoppers in seiner ausgefahrenen Position befindet.

Bevorzugt wird dies durch eine geometrische Kennlinienbeeinflussung erreicht. Alternativ oder zusätzlich kann die magnetische Haltekraft in einer der Hubendlagen zwischen 20% und 80% der magnetischen Haltekraft in der anderen Hubendlage betragen, bevorzugt zwischen 30% und 70%.

In einer bevorzugten Ausführungsform weist der Stopper im unbestromten Fall eine Raststelle in einer Position auf, in welcher der Nocken teilweise ausgefahren ist. Bevorzugt ist der Nocken an der Raststelle hinreichend weit ausgefahren, um in der Förderanlage Stückgut-Träger und/oder Stückgut sicher zu stoppen. Hierdurch ergibt sich eine stark erhöhte Sicherheit.

Die Raststelle kann durch eine asymmetrische Kennlinie erreicht werden.

Bevorzugt ist die Raststelle gegenüber der Mitte des Hubweges versetzt, wobei die Raststelle insbesondere zwischen der Hubendlage, welche einer komplett ausgefahrenen Position des Nocken entspricht, und der Mitte des Hubweges angeordnet ist.

Der Abstand zwischen der Raststelle und der Mitte des Hubweges beträgt bevorzugt mehr als 5 % des Hubweges, weiter bevorzugt mehr als 10 %, weiter bevorzugt mehr als 20%. Alternativ oder zusätzlich kann der Abstand zwischen der Raststelle und der Hubendlage, welche einer komplett ausgefahrenen Position des Nocken entspricht, bevorzugt mehr als 2 % des Hubweges betragen, weiter bevorzugt mehr als 5 %, weiter bevorzugt mehr als 10 %.

Die Raststelle wird bevorzugt durch eine Raststelle des Hubmagneten zur Verfügung gestellt, insbesondere durch eine dritte, im stromlosen Zustand stabile Hublage des Hubmagneten.

In einer möglichen Ausführungsform ist vorgesehen, dass die Steuerung eine Unterbrechung und/oder ein Abschalten der Spannungsversorgung des Stoppers erkennt und in Reaktion hierauf den Nocken ausfährt, wobei bevorzugt das Abfallen der Versorgungsspannung mittels einer Flankenerkennung erkannt wird. Der Stopper kann daher genauso angesteuert werden wie ein Stopper mit einem monostabilen Hubmagneten.

Alternativ oder zusätzlich kann die Steuerung so ausgestaltet sein, dass auf ein Zuschalten der Versorgungsspannung hin der oder die elektrischen Energiespeicher, vorzugsweise Kondensatoren, aufgeladen werden, und dass das Erreichen einer bestimmten Schwellspannung am elektrischen Energiespeicher von der Steuerung erkannt wird, woraufhin selbige den oder die Energiespeicher über den bistabilen Hubmagneten so entlädt, dass der Nocken eingefahren wird.

In einer möglichen Ausführungsform wird der bistabile Hubmagnet über eine Vollbrücke, insbesondere eine MOSFET-Vollbrücke angesteuert, wobei die Vollbrücke bevorzugt zwei weitere Schalter aufweist, über welche ein erster und einer zweiter Energiespeicher in einem ersten Schaltzustand parallel geschaltet und in einem zweiten Schaltzustand separat entladen werden können.

In einer möglichen Ausführungsform weist die Steuerung mindestens einen ersten und einen zweiten elektrischen Energiespeicher auf, wobei der erste Energiespeicher in Serie über zwei Spulen des Hubmagneten entladbar ist, und wobei der zweite Energiespeicher über nur eine der zwei Spulen des Hubmagneten entladbar ist.

In einer möglichen Ausführungsform ist der zweite Energiespeicher wahlweise über eine der beiden Spulen entladbar. Insbesondere kann die Entladung dabei je nach Bewegungsrichtung über die erste oder die zweite Spule erfolgen.

Alternativ oder zusätzlich kann der zweite Energiespeicher wahlweise auch in Serie über die zwei Spulen des Hubmagneten entladbar sein. Insbesondere kann die Entladung dabei je nach Bewegungsrichtung über eine der beiden Spulen oder in Serie über die zwei Spulen erfolgen.

Insbesondere kann die elektrische Schaltung so ausgestaltet sein, dass zur Ansteuerung einer ersten Bewegungsrichtung des Hubmagneten, insbesondere zum Ausfahren des Nocken, beide Energiespeicher in Serie über zwei Spulen des Hubmagneten entladen werden, und zur Ansteuerung einer zweiten Bewegungsrichtung des Hubmagneten, insbesondere zum Einfahren des Nocken, der erste Energiespeicher in Serie über die zwei Spulen und der zweite Energiespeicher über nur eine der zwei Spulen, insbesondere über die erste Spule, entladen wird.

Weiter bevorzugt erfolgt die Entladung des zweiten Energiespeichers mit einer zeitlichen Verzögerung zur Entladung des ersten Energiespeichers erfolgt, wobei das Entladen des zweiten Energiespeichers bevorzugt noch vor Eintreten des Stellvorgangs einsetzt.

Der Hubmagnet weist bevorzugt zwei Spulen auf, welche in Serie geschaltet sind und bevorzugt eine Mittelanzapfung aufweisen.

Weiterhin kann mindestens ein erster und einer zweiter Energiespeicher vorgesehen sein, wobei entlang einer ersten Bewegungsrichtung, insbesondere zum Ausfahren des Nocken, beide Energiespeicher über die in Reihe geschalteten Spulen entladen werden, während bei der umgekehrten Bewegungsrichtung, insbesondere zum Ausfahren des Nocken, zunächst der erste Energiespeicher über die in Reihe geschalteten Spulen entladen wird, und mit einer zeitlichen Verzögerung der zweite Energiespeicher über die Mittelanzapfung beider Spulen entladen wird, wobei das Entladen des zweiten Energiespeichers bevorzugt noch vor Eintreten des Stellvorgangs einsetzt.

In einer möglichen Ausführungsform weist die Steuerung Mittel zur Positionserfassung des Stoppers auf. Insbesondere kann die Steuerung einen Mikrocontroller aufweisen, welcher mit den Mitteln zur Positionserfassung verbunden ist, und/oder die mittels der Mittel zur Positionserfassung gewonnene Lageinformation beim Ansteuern des bistabilen Hubmagneten berücksichtigen.

Weiterhin kann der Nocken einen Dämpfungsmechanismus aufweisen und/oder mit einem solchen verbunden sein. Der Dämpfungsmechanismus bringt das Stückgut bevorzugt gedämpft zum Stehen.

In einer möglichen Ausführungsform weist der Stopper ein Federsystem mit einer ersten Feder, welche in einer ersten Hubendlage auf den oder die Anker des Hubmagneten eine Kraft in Richtung die Hubmittellage ausübt, sowie mit einer zweiten Feder, welche in einer zweiten Hubendlage auf den oder die Anker eine Kraft in Richtung die Hubmittellage ausübt, auf, wobei der oder die Anker im stromlosen Fall in beiden Hubendlagen entgegen der Federkraft permanentmagnetisch gehalten werden. Das Federsytem kann in den Hubmagneten integriert sein oder einen separaten Teil des Stoppers bilden. Bevorzugt weisen die erste und die zweite Feder unterschiedllich lange Federwege auf und/oder üben in der jeweiligen Hubendlage unterschiedlich große Kräfte auf den oder die Anker aus und/oder weisen unterschiedlich große Federraten auf.

Wie oben beschrieben entspricht die zweite Hubendlage bevorzugt der komplett ausgefahrenen Position des Nocken und die erste Hubendlage der komplett eingefahrenen Position.

Bevorzugt ist der Federweg der ersten Feder größer als der Federweg der zweiten Feder und die zweite Feder übt in der zweiten Hubendlage eine größere Kraft auf den oder die Anker aus als die erste Feder in der ersten Hubendlage auf den oder die Anker ausübt.

Alternativ oder zusätzlich kann der Federweg der ersten Feder größer als der Federweg der zweiten Feder sein und die Federrate der zweiten Feder in der zweiten Hubendlage größer als die Federrate der ersten Feder in der ersten Hubendlage sein.

In einer möglichen Ausführungsform der vorliegenden Erfindung beträgt der Federweg der ersten Feder zwischen dem 2-fachen und dem 100-fachen des Federweges der zweiten Feder, bevorzugt zwischen dem 4-fachen und dem 20-fachen.

In einer weiteren möglichen Ausführungsform der vorliegenden Erfindung beträgt die Kraft, welche die zweite Feder in der zweiten Hubendlage auf den oder die Anker ausübt, zwischen dem 1,5-fachen und dem 100-fachen der Kraft, welche die erste Feder in der ersten Hubendlage auf den oder die Anker ausübt, bevorzugt zwischen dem 3-fachen und dem 15-fachen.

In einer weiteren möglichen Ausführungsform der vorliegenden Erfindung beträgt die Federrate der zweiten Feder in der zweiten Hubendlage zwischen dem 2-fachen und dem 1000-fachen der Federrate der ersten Feder in der ersten Hubendlage, bevorzugt zwischen dem 10-fachen und dem 500-fachen, weiter bevorzugt zwischen dem 20-fachen und dem 100-fachen.

In einer weiteren möglichen Ausführungsform erzeugt mindestens eine der Federn und bevorzugt die zweite Feder über einen Teil des Hubweges keine Kraft zwischen dem Anker und dem Stator und/oder steht über einen Teil des Hubweges nicht mit dem Anker und/oder dem Stator in Kontakt. Bevorzugt ist in diesem Fall eine Rückhaltesicherung vorgesehen, welche die Feder über diesen Teil des Hubweges in einer vorgegebenen Position sichert und dabei bevorzugt in vorgespanntem Zustand hält.

In einer möglichen Ausführungsform ist vorgesehen, dass die magnetische Haltekraft des Hubmagneten in einer der beiden Hubendlagen kleiner als in der anderen Hubendlage ist. Insbesondere kann die magnetische Haltekraft des Hubmagneten in einer der beiden Hubendlagen um mindestens 20% kleiner, weiter bevorzugt um mindestens 30% kleiner als in der anderen Hubendlage sein.

Bevorzugt ist die magnetische Haltekraft in der ersten Hubendlage kleiner als in der zweiten Hubendlage.

Alternativ oder zusätzlich kann die magnetische Haltekraft in einer der Hubendlagen mindestens 20% der magnetischen Haltekraft in der anderen Hubendlage betragen, bevorzugt mindestens 30%.

In einer möglichen Ausführungsform ist vorgesehen, dass der Stator und der oder die Anker in einer der Hubendlagen und bevorzugt in der ersten Hubendlage eine geometrische Kennlinienbeeinflussung aufweisen, insbesondere einen nicht in einer Ebene senkrecht zur Achse des Hubmagneten verlaufenden Arbeits-Luftspalt, insbesondere einen konisch verlaufenden Arbeits-Luftspalt.

Bevorzugt weisen der Stator und der oder die Anker in der anderen Hubendlage und bevorzugt in der zweiten Hubendlage eine schwächere oder keine geometrische Kennlinienbeeinflussung auf.

In einer möglichen Ausführungsform ist vorgesehen, dass sich die Differenz zwischen dem Betrag der magnetischen Haltekraft und dem Betrag der Kraft, welche die jeweilige Feder aufbringt, in den beiden Hubendlagen um maximal 50% des größeren Wertes unterscheidet.

Im Folgenden werden einige konstruktive Merkmale eines Hubmagneten beschrieben, wie er in dem erfindungsgemäßen Stopper eingesetzt werden kann. Die Merkmale können sowohl einzeln, als auch in Kombination verwirklicht sein:
In einer möglichen Ausführungsform ist vorgesehen, dass die mindestens eine Spule und der mindestens eine Permamentmagent am Stator angeordnet sind.

In einer möglichen Ausführungsform ist vorgesehen, dass der Stator ein Gehäuse bildet, welches den oder die Anker umgibt, wobei bevorzugt ein Anker vorgesehen ist, welcher im Inneren des Stators auf einer Führungsstange angeordnet ist, wobei die Führungsstange bevorzugt beweglich am Stator gelagert ist. Die Führungsstange steht bevorzugt mit dem Nocken in Verbindung und überträgt die Kraft des Hubmagenten auf den Nocken.

In einer möglichen Ausführungsform ist vorgesehen, dass das Federsystem innerhalb des Stators angeordnet ist, wobei die erste Feder bevorzugt zwischen dem ersten Stirnabschnitt und einer ersten Seite des Ankers und die zweite Feder zwischen einem zweiten Stirnabschnitt und einer zweiten Seite des Ankers angeordnet ist, und/oder wobei die erste und die zweite Feder als Spiraldruckfedern ausgeführt sind, welche die Führungsstange des Ankers umfassen.

In einer möglichen Ausführungsform ist vorgesehen, dass der Stator eine weichmagnetische Hülse und einen ersten und zweiten weichmagnetischen Stirnabschnitt aufweist, welche ein Gehäuse bilden, in welchem der Anker verschieblich angeordnet ist.

In einer möglichen Ausführungsform kann zwischen dem Anker und dem ersten Stirnabschnitt mindestens ein erster Arbeitsluftspalt und zwischen dem Anker und dem zweiten Stirnabschnitt mindestens ein zweiter Arbeitsluftspalt vorgesehen sein.

Bevorzugt sind am Stator mindestens ein Permanentmagnet und mindestens eine erste und eine zweite Spule angeordnet sind, wobei der Anker in der ersten Hubendlage mit der Hülse und dem ersten Stirnabschnitt einen ersten magnetischen Teilkreis bildet, welcher zumindest die erste Spule umgibt, während der oder die Arbeitsluftspalte mit dem zweiten Stirnabschnitt maximal geöffnet sind, und wobei der Anker in der zweiten Hubendlage mit der Hülse und dem zweiten Stirnabschnitt einen zweiten magnetischen Teilkreis bildet, welcher zumindest die zweite Spule umgibt, während der oder die Arbeitsluftspalte mit dem ersten Stirnabschnitt maximal geöffnet sind.

In einer möglichen Ausführungsform ist vorgesehen, dass der mindestens eine Permanentmagnet in axialer Richtung zwischen der ersten und der zweiten Spule angeordnet ist und jeweils einen Teil des ersten und des zweiten magnetischen Teilkreises bildet, wobei der Permanentmagnet so angeordnet ist, dass er sowohl in der ersten als auch in der zweiten Hubendlage in axialer Richtung mit dem Anker überlappt und diesen bevorzugt umgibt, wobei der Permanentmagnet bevorzugt magnetisch unmittelbar an den Anker koppelt. Es sind jedoch andere Anordnungen des Permanentmagneten oder der Permanentmagneten möglich.

In einer bevorzugten Ausgestaltung ist dagegen vorgesehen, dass mindestens ein erster und ein zweiter Permanentmagnet vorgesehen sind, wobei die erste und die zweite Spule in axialer Richtung zwischen dem ersten und dem zweiten Permanentmagneten angeordnet sind, wobei der erste Permanentmagnet die Hülse und den ersten Stirnabschnitt und der zweite Permanentmagnet die Hülse und den zweiten Stirnabschnitt unter eine magnetische Spannung setzen. Hierdurch kann die Baulänge gegenüber anderen konstruktiven Ausgestaltungen verringert werden.

In einer möglichen Ausführungsform ist vorgesehen, dass der erste Teilmagnetkreis den ersten Permanentmagneten und der zweite Teilmagnetkreis den zweiten Permanentmagneten umfasst.

In einer möglichen Ausführungsform ist vorgesehen, dass der Anker die Hülse und den ersten Stirnabschnitt in der ersten Hubendlage magnetisch kurzschließt und der Anker die Hülse und den zweiten Stirnabschnitt in der zweiten Hubendlage magnetisch kurzschließt.

In einer möglichen Ausführungsform ist vorgesehen, dass die Hülse zwischen den beiden Spulen einen Magnetkreisabschnitt aufweist, welcher sowohl in der ersten als auch in der zweiten Hubendlage in axialer Richtung mit dem Anker überlappt und diesen bevorzugt umgibt, wobei der Magnetkreisabschnitt bevorzugt magnetisch unmittelbar an den Anker koppelt.

In einer möglichen Ausführungsform ist vorgesehen, dass die erste und die zweite Spule zumindest teilweise zwischen der Hülse und dem Bewegungsbereich des Ankers und/oder in einer Innennut und/oder Aussparung der Hülse angeordnet sind.

Weiterhin bevorzugt ist vorgesehen, dass der erste und/oder zweite Stirnabschnitt einen Befestigungsbereich aufweisen, welcher sich in radialer Richtung über den ersten bzw. zweiten Permanentmagneten hinweg erstreckt und an der Hülse befestigt ist. Hierdurch wird die Montage erheblich vereinfacht. Bevorzugt ist der Befestigungsbereich durch den ersten bzw. zweiten Permanentmagneten magnetisch gesättigt.

In einer möglichen Ausführungsform ist der Befestigungsbereich plattenförmig, insbesondere ringplattenförmig ausgestaltet, und/oder weist Aussparungen auf. In einer möglichen Ausführungsform weist der Befestigungsbereich nach außen hin weniger Material aufweist und wird insbesondere dünner.

Insbesondere weist die Steuerung in einer möglichen Ausführungsform mindestens einen ersten und einen zweiten elektrischen Energiespeicher auf, wobei der erste Energiespeicher in Serie über zwei Spulen des Hubmagneten entladbar ist, und wobei der zweite Energiespeicher über nur eine der zwei Spulen des Hubmagneten entladbar ist.

In einer möglichen Ausführungsform ist der zweite Energiespeicher wahlweise über eine der beiden Spulen entladbar. Insbesondere kann die Entladung dabei je nach Bewegungsrichtung über die erste oder die zweite Spule erfolgen.

Alternativ oder zusätzlich kann der zweite Energiespeicher wahlweise auch in Serie über die zwei Spulen des Hubmagneten entladbar sein. Insbesondere kann die Entladung dabei je nach Bewegungsrichtung über eine der beiden Spulen oder in Serie über die zwei Spulen erfolgen.

Insbesondere kann die elektrische Schaltung so ausgestaltet sein, dass zur Ansteuerung einer ersten Bewegungsrichtung des Hubmagneten, insbesondere zum Ausfahren des Nocken, beide Energiespeicher in Serie über zwei Spulen des Hubmagneten entladen werden, und zur Ansteuerung einer zweiten Bewegungsrichtung des Hubmagneten, insbesondere zum Einfahren des Nocken, der erste Energiespeicher in Serie über die zwei Spulen und der zweite Energiespeicher über nur eine der zwei Spulen, insbesondere über die erste Spule, entladen wird.

Weiter bevorzugt erfolgt die Entladung des zweiten Energiespeichers mit einer zeitlichen Verzögerung zur Entladung des ersten Energiespeichers erfolgt, wobei das Entladen des zweiten Energiespeichers bevorzugt noch vor Eintreten des Stellvorgangs einsetzt.

Die vorliegende Erfindung umfasst weiterhin eine Stückgut-Förderanlage nach Anspruch 14, mit einer kontinuierlich betriebenen Stückgut-Förderstrecke zum Fördern von Stückgut und/oder Stückgut-Trägern, mit einem oder mehreren Stoppern, wie sie oben beschrieben wurden, zum Stoppen und/oder Vereinzeln des Stückgutes und/oder der Stückgut-Träger.

Die vorliegende Erfindung wird nun anhand von Ausführungsbeispielen und Zeichnungen näher erläutert.

Dabei zeigen:
- Fig. 1a:: ein Ausführungsbeispiel einer Stückgut-Förderanlage gemäß der vorliegenden Erfindung,
- Fig. 1b:: ein Ausführungsbeispiel eines erfindungsgemäßen elektromagnetischen Stoppers,
- Fig. 2:: ein Ausführungsbeispiel des erfindungsgemäß eingesetzten Hubmagneten in einer Schnittansicht,
- Fig. 3:: ein erstes Ausführungsbeispiel einer Steuerung zur Ansteuerung des erfindungsgemäß eingesetzten bistabilen Hubmagneten und
- Fig. 4:: ein zweites Ausführungsbeispiel einer Steuerung zur Ansteuerung des erfindungsgemäß eingesetzten bistabilen Hubmagneten.

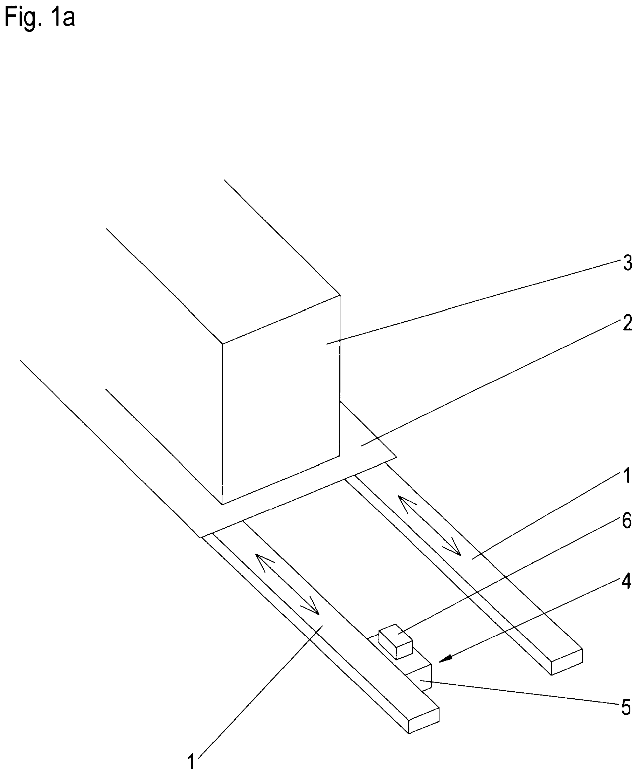

In Fig. 1a ist schematisch ein Ausführungsbeispiel einer erfindungsgemäßen, kontinuierlich betriebenen Stückgut-Förderanlage gezeigt. Diese weist eine Förderstrecke 1 auf, welche durch einen nicht dargestellten Antrieb kontinuierlich bewegt wird, insbesondere ein Förderband. Auf dieser liegen reibschlüssig Stückgut-Träger 2 auf, auf welchem Stückgut 3 angeordnet ist. Durch die Reibung zwischen den Stückgut-Trägern 2 und der Förderstrecke 1 werden die Stückgut-Träger mit dem Förderband mitgenommen und so verfahren.

Der erfindungsgemäße Stopper 4 wird zum Stoppen und/oder Vereinzeln der Stückgut-Träger 2 bzw. des Stückgutes 3 eingesetzt. Hierfür weist er einen Nocken 6 auf, welcher ein- und ausgefahren werden kann, und hierdurch in den Verfahrweg der Stückgut-Träger verfahren und aus diesem Verfahrweg entfernt werden kann.

In der komplett ausgefahrenen Stellung befindet sich der Nocken 6 im Verfahrweg der Stückgut-Träger, und stoppt diese daher. Durch Einfahren des Nocken kann dieser aus dem Verfahrweg entfernt werden, und gibt hierdurch den Stückgut-Träger frei. Der Nocken kann weiterhin einen Dämpfungsmechanismus aufweisen bzw. über einen solchen an dem Stopper-Gehäuse 5 angeordnet sein. Der Dämpfer ist bevorzugt so ausgeführt, dass er die Bewegung eines Stückgut-Trägers 2 gedämpft zum Stillstand bringt.

Der Nocken 6 ist an dem Gehäuse 5 des elektromagnetischen Stoppers beweglich angeordnet und kann erfindungsgemäß mit Hilfe eines bistabilen Hubmagneten ein- und ausgefahren werden.

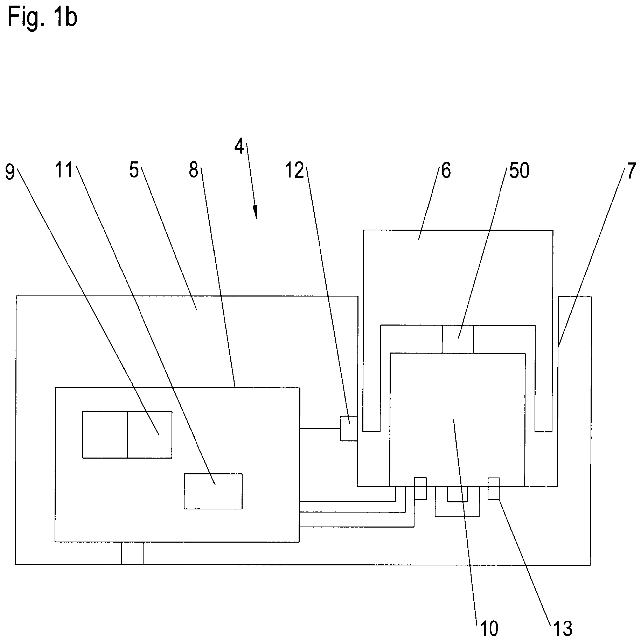

In Fig. 1b ist ein Ausführungsbeispiel des elektromagnetischen Stoppers gezeigt. Dieser weist ein Gehäuse 5 mit einer Führung 7 auf, an welcher der Nocken 6 verschieblich gelagert ist. Zum Ein- und Ausfahren des Nocken 6 ist der Hubmagnet 10 vorgesehen. Das Gehäuse des Hubmagneten 10 ist über Schrauben 13 an dem Gehäuse 5 des Stoppers befestigt. Eine Achse 50 des Hubmagneten 10 steht mit dem Nocken 6 in Verbindung, um diesen ein- und auszufahren.

Weiterhin ist in dem Gehäuse 5 eine Steuerung 8 zu Ansteuerung des Hubmagneten 10 vorgesehen. Diese weist einen oder mehrere elektrische Energiespeicher 9, im Ausführungsbeispiel Kondensatoren, auf. Weiterhin sind Schalter 11, im Ausführungsbeispiel Halbleiterschalter, vorgesehen, welche den oder die Energiespeicher 9 über mindestens eine Spule des Hubmagneten so entladen können, dass der Nocken ausgefahren wird.

Die Steuerung erkennt bevorzugt eine Unterbrechung und/oder ein Abschalten der Spannungsversorgung des Stoppers und fährt in Reaktion hierauf den Nocken aus, wobei bevorzugt das Abfallen der Versorgungsspannung mittels einer Flankenerkennung erkannt wird. Weiterhin kann die Steuerung so ausgestaltet sein, dass auf ein Zuschalten der Versorgungsspannung hin der oder die elektrischen Energiespeicher aufgeladen werden, und dass das Erreichen einer bestimmten Schwellspannung am elektrischen Energiespeicher von der Steuerung erkannt wird, woraufhin selbige den oder die Energiespeicher über den bistabilen Hubmagneten so entlädt, dass der Nocken eingefahren wird.

Der Hubmagnet weist neben der mindestens einen Spule mindestens einen Permanentmagneten auf, und ist bistabil ausgestaltet. Insbesondere wird der Hubmagnet sowohl in einer ersten Hubendlage, welche einem komplett eingefahrenen Nocken entspricht, als auch in einer zweiten Hubendlage, in welcher der Nocken komplett ausgefahrenen ist, permanentmagnetisch gehalten, solang die Spulen des Hubmagneten unbestromt bleiben. Bevorzugt weist der Hubmagnet ein Federsystem auf, welches den Hubmagneten in den Hubendlagen in Richtung auf eine Hubmittellage vorspannt.

Im Ausführungsbeispiel ist weiterhin ein Sensor 12 vorgesehen, welcher die Position des Nocken 6 erfasst. Die Daten des Sensors 12 können über die Steuerung 8 ausgewertet werden.

Im Ausführungsbeispiel in Fig. 1b ist der Nocken 6 in einer Aussparung 7 des Gehäuses 5 geführt. Der Nocken 6 könnte in alternativen Ausgestaltungen jedoch auch in anderer Weise am Gehäuse 4 beweglich angeordnet sein, und beispielsweise an einer Seitenwand des Gehäuses beweglich angeordnet und/oder geführt sein.

Ein Einfahren im Sinne der Vorliegenden Erfindung erfordert insbesondere nicht, dass der Nocken in einer Aussparung des Gehäuses eingefahren wird. Vielmehr liegt ein Einfahren bereits dann vor, wenn der Nocken aus der ausgefahrenen Position zurück in eine Position gefahren werden kann, in welcher er den Förderweg frei gibt.

Im Ausführungsbeispiel weist der Stopper im unbestromten Fall eine Raststelle in einer Position auf, in welcher der Nocken teilweise ausgefahren ist. Insbesondere wird dies über eine weitere stabile Hublage des Hubmagneten erreicht, welche zwischen der ersten und der zweiten Hubendlage liegt. Bevorzugt ist der Nocken an der Raststelle hinreichend weit ausgefahren, um in der Förderanlage Stückgut-Träger und/oder Stückgut sicher zu stoppen. Insbesondere kann der Nocken über seine Mittellage hinaus ausgefahren sein, und bevorzugt auf mindestens 70% seines Hubwegs ausgefahren sein.

Die Bewegungsrichtung des Nocken steht bevorzugt nicht senkrecht auf der Bewegungsrichtung der Förderstrecke, sondern ist gegen die Bewegungsrichtung der Förderstrecke geneigt. Der erfindungsgemäß eingesetzte Hubmagnet kann dabei so schnell eingefahren werden, dass durch die geneigte Bewegungsrichtung des Nocken dieser nach dem erstmaligen Lösen vom Werkstückträger oder Werkstück nicht mehr mit diesem in Kontakt kommt, da die Geschwindigkeit des Nocken in Bewegungsrichtung der Förderstrecke größer ist als die Geschwindigkeit der Förderstrecke.

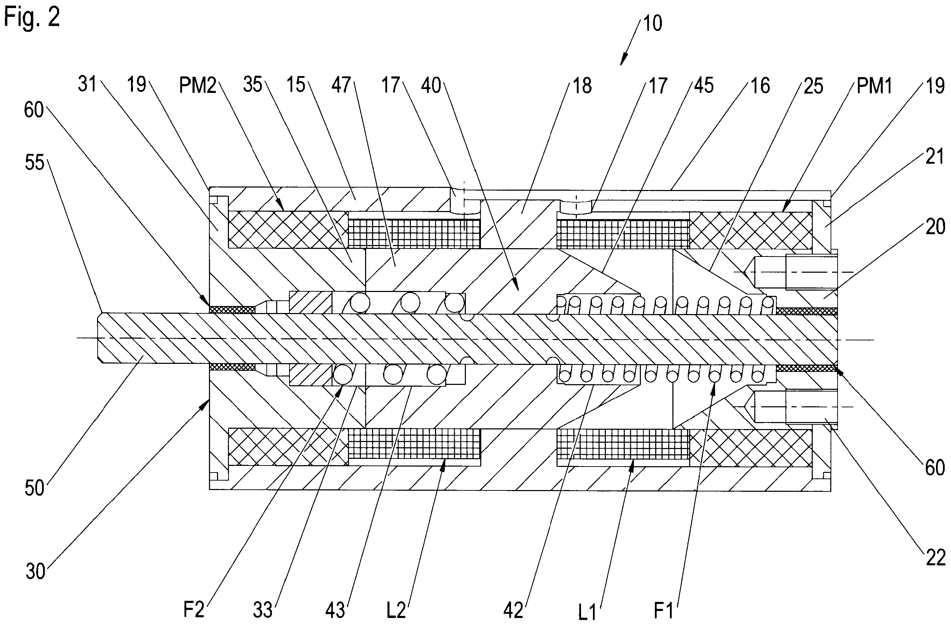

Ein Ausführungsbeispiel eines bistabilen Hubmagneten, wie er im Rahmen der vorliegenden Erfindung zum Einsatz kommen kann, sowie zwei Ausführungsbeispiele von Steuerungen zur Ansteuerung eines erfindungsgemäß eingesetzten Hubmagneten, werden im Folgenden anhand der Fig. 2 bis 4 näher dargestellt.

Fig. 2 zeigt ein Ausführungsbeispiel eines bistabilen Hubmagneten, bei welchen eine Mehrzahl von Aspekten der vorliegenden Erfindung in Kombination verwirklicht sind. Die anhand des Ausführungsbeispiels in Kombination beschriebenen Merkmale gemäß der einzelnen Aspekte können jedoch auch jeweils für sich genommen erfindungsgemäß eingesetzt werden.

Der bistabile Hubmagnet gemäß der vorliegenden Erfindung weist einen Stator und einen gegenüber dem Stator axial verschieblichen Anker 40 auf. Stator und Anker bestehen aus einem weichmagnetischen Material.

Im Ausführungsbeispiel umfasst der Stator eine weichmagnetische Hülse 15 und zwei weichmagnetische Stirnabschnitte 20 und 30, welche ein Gehäuse bilden, in welchem der Anker 40 verschieblich angeordnet ist. Die Stirnabschnitte weisen im Ausführungsbeispiel jeweils einen Bereich auf, welcher in der Hülse 15 angeordnet ist, insbesondere einen im wesentlichen zylinderförmigen Bereich.

Im Ausführungsbeispiel wird der Anker 40 von einer Achse 50 getragen, welche über Lager 60 an den Stirnabschnitten 20 und 30 des Stators axialverschieblich gelagert ist. Durch eine Bewegung des Ankers 40 wird dementsprechend die Achse 50 bewegt. Im Ausführungsbeispiel weist die Achse 50 eine zweite Seite mit einen Verbindungsbereich 55 auf, mit welchem sie mit dem Nocken verbunden wird. Zwischen dem Anker 40 und den Stirnabschnitten 20 und 30 befinden sich die Arbeitsluftspalte des Hubmagneten.

In der zweiten Hubendlage ist die zweite Seite der Achse 50 mit dem Verbindungsbereich 55 ganz ausgefahren, so dass auch der Nocken ganz ausgefahren ist. In der ersten Hubendlage ist die zweite Seite der Achse 50 mit dem Verbindungsbereich 55 zum Nocken komplett eingefahren und dafür die Achse auf der gegenüberliegenden ersten Seite komplett ausgefahren ist. In der ersten Hubendlage ist der Nocken komplett eingefahren.

Der Hubmagnet weist im Ausführungsbeispiel Bohrungen 22 auf, insbesondere Gewindebohrungen, durch welche er an dem Gehäuse des Stoppers montiert ist.

Alternative konstruktive Ausgestaltungen des Stators, des Ankers sowie der Achse sind im Rahmen der vorliegenden Erfindung ebenfalls denkbar.

Der innere Aufbau des Hubmagneten ist in der Schnittansicht in Fig. 2 gezeigt. Der bistabile Hubmagnet weist ein Federsystem mit einer ersten Feder F1 auf, welche in einer ersten Hubendlage auf den Anker 40 eine Kraft in Richtung auf die Hubmittellage ausübt, sowie eine zweite Feder F2, welche in der in Fig. 2 dargestellten zweiten Hubendlage eine Kraft auf den Anker 40 in Richtung auf die Hubmittellage ausübt.

Im Ausführungsbeispiel sind die beiden Federn jeweils innerhalb des durch den Stator gebildeten Gehäuses zwischen einem der Stirnabschnitte 20 bzw. 30 und dem Anker 40 angeordnet. Im Ausführungsbeispiel handelt es sich um Spiralfedern, welche die Achse 50 umgeben. Im Anker 40 sind Ringnuten 42 bzw. 43 vorgesehen, welche in den jeweiligen Endlagen zumindest einen Teil der jeweiligen Feder aufnehmen. Entsprechende Ringnuten können auch in den Stirnabschnitten 20 und 30 vorgesehen sein.

Weiterhin ist mindestens ein Permanentmagnet PM1 und PM2 vorgesehen, welcher im unbestromten Zustand der Spulen den Anker 40 entgegen der Kraft der jeweiligen Feder in der jeweiligen Hubendlage hält. Im Ausführungsbeispiel sind zwei Permanentmagnete PM1 und PM2 vorgesehen, welche den jeweiligen Hubendlagen zugeordnet sind. Anstelle zweier Permanentmagnete könnte auch nur ein einzelner Permanentmagnet eingesetzt werden.

Weiterhin sind Spulen L1 und L2 vorgesehen, durch deren Bestromung der Anker von einer Hubendlage in die andere Hubendlage verfahren werden kann. Im Ausführungsbeispiel sind zwei Spulen L1 und L2 vorgesehen, deren Wicklungen im Bereich 17 jeweils separat aus dem Gehäuse geführt sind. Alternativ könnten die Spulen auch innerhalb des Gehäuses in Reihe geschaltet sein und bevorzugt einen Mittelabgriff aufweisen.

Gemäß dem ersten Aspekt der vorliegenden Erfindung werden unterschiedliche Federn F1 und F2 eingesetzt. Im Ausführungsbeispiel weisen die erste und die zweite Feder zum einen unterschiedlich lange Federwege auf. Insbesondere ist der Federweg der ersten Feder F1 größer als der Federweg der zweiten Feder F2. Weiterhin üben die beiden Federn in der jeweiligen Hubendlage unterschiedlich große Kräfte auf den Anker aus. Insbesondere übt die erste Feder F1 in der ersten Hubendlage, in welche der Anker 40 in Anschlag mit dem ersten Stirnabschnitt 20 steht, eine kleinere Kraft auf den Anker 40 aus, als dies die zweite Feder F2 in der zweiten, in Fig. 2 gezeigten Hubendlage tut, in welcher der Anker 40 in Anschlag mit dem zweiten Stirnabschnitt 30 steht. Weiterhin weist die erste Feder F1 im Ausführungsbeispiel eine kleinere Federrate auf als die zweite Feder F2.

Weiterhin übt die zweite Feder aufgrund des kleineren Federwegs nur über einen Teil des Hubweges eine Kraft auf den Anker 40 aus. Bevorzugt ist eine in Fig. 2 nicht eingezeichnete Rückhaltesicherung vorgesehen, welche die zweite Feder F2 über den Teil des Hubweges, in welchem diese keine Kraft zwischen dem Anker und dem Stator erzeugt, in einer vorgegebenen Position sichert und diese in einem vorgespannten Zustand hält. Dies erhöht die Lebensdauer des Hubmagneten.

Im konkreten Ausführungsbeispiel weist der Hubmagnet einen Hubweg von 15mm auf. Die erste Feder weist einen Federweg auf, welche dem Hubweg entspricht. Die zweite Feder F2 weist dagegen lediglich einen Federweg von 2mm auf. Die erste Feder übt in der ersten Hubendlage eine Kraft von ca. 50 N auf den Anker auf und weist eine Federrate von ca. 3,5 N/mm auf. Die zweite Feder übt in der zweiten Hubendlage eine Kraft von ca. 350 N auf den Anker auf und weist eine Federrate von ca. 170 N/mm auf. Beide Federn sind bei Erreichen ihres maximalen Federwegs vorgespannt.

Durch die unterschiedlichen Federn F1 und F2 können im Ausführungsbeispiel eine Reihe von Vorteilen erzieht werden. Die starke Feder F2 sorgt für eine hohe Beschleunigung des Ankers bei einer Bewegung aus der zweiten Hubendlage in Richtung auf die Hubmittellage. Die erste Feder F1 mit dem langen Federweg erlaubt dagegen eine entsprechend lange Ausgestaltung des Hubweges.

Gemäß einem weiteren Aspekt der vorliegenden Erfindung weist der Hubmagnet im unbestromten Fall eine asymmetrisch angeordnete Raststelle auf. Diese Raststelle stellt eine dritte stabile Hublage des bistabilen Hubmagneten im unbestromten Fall dar, welche zwischen der ersten und der zweiten Hubendlage angeordnet ist. Diese Raststelle, in welcher sich die von den Federn und Permanentmagneten auf den Anker 40 ausgeübten entgegengesetzten Kräfte aufheben, ist asymmetrisch, d.h. gegenüber der Mitte des Hubweges versetzt angeordnet.

Dies hat den Vorteil, dass der Hubmagnet mit nur sehr wenig Energie in eine weitgehend aus- oder eingefahrene Stellung gebracht werden kann, indem er von der Hubendlage, welche weiter von der Raststelle entfernt ist, in die Raststelle verfahren wird. Eine solche asymmetrische Raststelle, welche mit nur geringem Energieeinsatz angefahren werden kann, stellt in vielen Anwendungen eine wichtige Sicherungsfunktion dar.

Im Ausführungsbeispiel wird die asymmetrische Raststelle hauptsächlich durch die unterschiedlichen Federn gemäß dem ersten Aspekt der vorliegenden Erfindung erreicht, insbesondere durch die unterschiedlich langen Federwege und/oder die unterschiedlich großen Kräfte und/oder unterschiedlich großen Federraten der ersten und der zweiten Feder. Insbesondere ist die Raststelle näher an der zweiten Hubendlage angeordnet als an der ersten Hubendlage, da die zweite Feder einen kleineren Federweg aufweist als die erste Feder. Da die zweite Feder eine weitaus größere Federrate aufweist als die erste Feder, wird die Raststelle überwiegend durch die Länge des Federwegs der zweiten Feder bestimmt, und liegt daher im Ausführungsbeispiel ca. 2mm von der zweiten Hubendlage entfernt. Im Ausführungsbeispiel üben die auf den Anker wirkenden magnetischen Kräfte nur eine untergeordnete Rolle auf die genaue Lage der Raststelle aus.

Die Raststelle kann aus der ersten Hubendlage mit nur geringem Energieeinsatz erreicht werden, da hierzu die (große) rückstellende Kraft der zweiten Feder F2 nicht überwunden werden muss. Dennoch ist der Antrieb bei Erreichen der Raststelle bereits weitgehend ausgefahren.

Gemäß einem weiteren Aspekt der vorliegenden Erfindung ist der Hubmagnet so ausgestaltet, dass die permanentmagnetische Haltekraft, oft auch als "Haftkraft" bezeichnet, in der ersten und der zweiten Hubendlage unterschiedlich groß ist. Insbesondere ist der Hubmagnet dabei so ausgestaltet, dass die permanentmagnetische Haltekraft in der ersten Hubendlage kleiner ist als in der zweiten Hubendlage. Im Ausführungsbeispiel ist hierfür eine geometrische Kennlinienbeeinflussung zwischen der ersten Stirnseite 45 des Ankers, welche dem ersten Stirnabschnitt 20 zugewandt ist, und der Innenseite 25 des ersten Stirnabschnittes 20 vorgesehen. Zwischen diesen beiden Flächen 25 und 45 befindet sich der erste Arbeitsluftspalt, welcher in der ersten Hubendlage geschlossen ist. Die geometrische Kennlinienbeeinflussung bedeutet, dass die Flächen 25 und 45 nicht in einer Ebene senkrecht zur axialen Bewegungsrichtung des Hubmagneten verlaufen, sondern bezüglich einer solchen Ebene ein Profil aufweisen. Im Ausführungsbeispiel weisen die Flächen ein konisches Profil auf, welches im Ausführungsbeispiel einen solchen Winkel aufweist, dass die permanentmagnetische Haltekraft um näherungsweise 50% reduziert wird.

Auf der gegenüberliegenden Seite, auf welcher sich die zweite Stirnseite 47 des Ankers 40 und die Innenseite 35 des zweiten Stirnabschnittes 30 über einen zweiten Arbeitsluftspalt gegenüber liegen, ist dagegen keine geometrische Kennlinienbeeinflussung vorgesehen. Hier verlaufen die beiden Flächen, zwischen welchen sich der Arbeitsluftspalt befindet, in einer Ebene senkrecht zur axialen Bewegungsrichtung des Hubmagneten.

Die unterschiedlich großen permanentmagnetischen Haltekräfte in der ersten und in der zweiten Hubendlage sind bevorzugt so gewählt, dass die jeweilige Differenz zwischen der permanentmagnetischen Haltekraft und der jeweiligen entgegengesetzten Federkraft in den beiden Hubendlagen im Wesentlich gleich groß ist und/oder unter Berücksichtigung äußerer auf den Hubmagneten wirkender Kräfte bevorzugt zumindest in der gleichen Größenordnung liegt. Diese Differenz sichert den Hubmagneten in den beiden Hubendlagen jeweils gegen eine ungewollte Auslösung, bspw. durch Erschütterungen. Im Ausführungsbeispiel beträgt die magnetische Haltekraft in der ersten Hubendlage ca. 225 N, in der zweiten Hubendlage ca. 450 N.

Gemäß einem weiteren Aspekt der vorliegenden Erfindung ist der bistabile Hubmagnet so ausgelegt, dass der Wert der in den beiden Hubendlagen jeweils im Hubmagneten gespeicherten potentiellen Energie sich um nicht mehr als 50% des größeren Wertes voneinander unterscheidet, d.h. dass der kleinere der beiden Werte mindestens 50% des größeren Wertes beträgt. Bevorzugt ist die potentielle Energie in den beiden Hubendlagen dabei im Wesentlichen gleich groß. Für die Berechnung der potentiellen Energie wird die elektrische Energie unberücksichtigt gelassen, und der unbestromte Fall betrachtet. Im einfachsten Fall ergibt sich die potentielle Energie daher aus der durch die Federn und Permanentmagnete gespeicherten potentiellen Energie.

Besonders bevorzugt werden im Rahmen der Bestimmung der potentiellen Energie auch externe Kräfte, welche im Rahmen seiner konkreten Verwendung auf den bistabilen Hubmagneten wirken, berücksichtigt. Dies kann beispielsweise die Gravitationskraft sein, wenn der Hubmagnet entgegen der Gravitationskraft ein Element anhebt. Alternativ oder zusätzlich kann es sich auch um externe Federkräfte handeln, beispielsweise wenn der Hubmagnet zum Bewegen eines federbelasteten Elementes eingesetzt wird.

Durch die in den beiden Hubendlagen ähnlich große potentielle Energie ergibt sich ein besonders energiesparender Betrieb des Hubmagneten. Im Ausführungsbeispiel wird die ähnlich große potentielle Energie insbesondere dadurch erreicht, dass die Feder mit der größeren Kraft und/oder Federrate den kleineren Federweg aufweist.

In dem in Fig. 2 gezeigten Ausführungsbeispiel des bistabilen Hubmagneten ist weiterhin ein zweiter, von der obigen Aspekten und insbesondere der unterschiedlichen Ausgestaltung der Federn unabhängiger Aspekt der vorliegenden Erfindung verwirklicht, und zwar durch die konstruktive Ausgestaltung des Stators, des Ankers sowie die Anordnung der Permanentmagnete und Spulen.

Der Stator ist im Ausführungsbeispiel durch eine weichmagnetische Hülse 15 sowie die beiden Stirnabschnitte 20 und 30 gebildet, welche gemeinsam ein Gehäuse bilden, in dessen Inneren der weichmagnetische Anker 40 verschieblich angeordnet ist. Die Hülse 15 erstreckt sich zwischen dem ersten Stirnabschnitt 20 und dem zweiten Stirnabschnitt 30 über die gesamte Länge des Hubmagneten. Zwischen der ersten Seite des Ankers 40 und dem ersten Stirnabstand 20 ist ein erster Arbeitsluftspalt, zwischen der zweiten Seite des Ankers 40 und dem zweiten Stirnabschnitt 30 ein zweiter Arbeitsluftspalt gebildet.

Gemäß dem zweiten Aspekt sind zwei Permanentmagneten PM1 und PM2 vorgesehen, welche den Anker 40 entgegen der Kraft des Federsystems in den jeweiligen Hubendlagen halten. Die beiden Permanentmagnete PM1 und PM2 sind jeweils so zwischen der magnetischen Hülse 15 und dem jeweiligen Stirnabschnitt 20 bzw. 30 angeordnet, dass sie diese unter eine magnetische Spannung setzen. Hierzu können PM1 und PM2 beispielsweise aus jeweils einem oder mehreren radial polarisierten hartmagnetischen Ringen, bevorzugt NdFeB, gebildet werden. Alternativ können PM1 und PM2 aus radial oder diametral polarisierten, hartmagnetischen Ringsegmenten gebildet werden. Der Anker 40 schließt in der jeweiligen Hubendlage die Hülse 15 mit dem jeweiligen Stirnabschnitt 20 bzw. 30 über den Magnetkreisabschnitt 18, welcher als Rückschluss fungiert, magnetisch kurz, so dass der jeweilige Permanentmagnet in der jeweiligen Hubendlage eine Haltekraft auf den Anker 40 ausübt. Den beiden Hubendlagen ist jeweils eine Spule L1 bzw. L2 zugordnet, durch deren Bestromung der Anker aus der jeweiligen Hubendlage gelöst bzw. bei umgekehrter Stromrichtung entgegen der Kraft der jeweiligen Feder in seine Hubendlage gezogen werden kann.

Der in der ersten bzw. zweiten Hubendlage durch die Hülse, den Anker, den jeweiligen Stirnabschnitt und jeweiligen Permanentmagneten gebildete magnetische Teilkreis umgibt die jeweilige Spule L1 bzw. L2, so dass eine Bestromung der Spule in einer Stromrichtung der magnetischen Haltekraft des jeweiligen Permanentmagneten entgegen wirkt und so für eine Auslenkung des Ankers aus der jeweiligen Hubendlage sorgt. Ist die Haltekraft des Permanentmagneten überwunden, trägt die jeweilige Feder erheblich zur Bewegung des Ankers bei.

Die Spulen L1 und L2 sind in axialer Richtung des Hubmagneten zwischen den beiden Permanentmagneten PM1 und PM2 angeordnet. Die Hülse 15 weist einen mittleren Magnetkreisabschnitt 18 auf, welcher zwischen den beiden Spulen L1 und L2 so angeordnet ist, dass er sowohl in der ersten Hubendlage als auch in der zweiten Hubendlage magnetisch an den Anker 40 koppelt. In axialer Richtung schließen an diesem Magnetkreisabschnitt 18 der Hülse 15 auf beiden Seiten jeweils die Spulen L1 bzw. L2 an, neben welchen dann in axialer Richtung weiter außen die jeweiligen Permanentmagnete PM1 und PM2 angeordnet sind. Der Magnetkreisabschnitt 18 wird im Ausführungsbeispiel durch eine nach innen auskragende Erhebung der Innenwand der Hülse 15 gebildet, während die Spulen L1 und L2 bzw. die Permanentmagnete F1 und F2 in Nuten bzw. Aussparungen am Innenumfang der Hülse 15 angeordnet sind.

Im Ausführungsbeispiel sind die Permanentmagneten PM1 und PM2 jeweils zwischen der Hülse 15 und einem in die Hülse hineinragenden Teil des jeweiligen Stirnabschnittes 20 bzw. 30 angeordnet. Die Spulen L1 und L2 sind dagegen zumindest teilweise neben dem Bewegungsbereich des Ankers 40 angeordnet.

Durch die Verwendung der axial außen angeordneten Permanentmagneten PM1 und PM2 kann gegenüber anderen Bauformen die Baulänge des Hubmagneten verringert werden.

Im Ausführungsbeispiel ist der Hubmagnet rotationssymmetrisch um die Achse 50 ausgeführt.

Gemäß einem weiteren Aspekt der vorliegenden Erfindung weisen die weichmagnetischen Stirnabschnitte 20 und 30 des Stators jeweils einen Befestigungsbereich 21 bzw. 31 auf, mit welchem sie mit der Hülse 15 in Verbindung stehen. Dies hat konstruktiv erhebliche Vorteile, da hierdurch eine einfache und stabile Verbindung zwischen den Stirnabschnitten und der Hülse im Verbindungsbereich 19 ermöglicht wird.

Da der Befestigungsbereich 21 bzw. 31 sich jedoch in radialer Richtung über den ersten bzw. den zweiten Permanentmagneten PM1 bzw. PM2 erstreckt, stellt er einen eigentlich unerwünschten magnetischen Kurzschluss zwischen der Hülse und dem jeweiligen Stirnabschnitt her. Der Befestigungsbereich ist daher vorzugsweise so ausgestaltet, dass er durch den jeweiligen Permanentmagneten magnetisch komplett gesättigt ist. Bevorzugt beträgt der magnetische Fluss, welcher von der Hülse über den Befestigungsabschnitt fließt, maximal 50 % des magnetischen Flusses, welcher in der jeweiligen Hubendlage von der Hülse über den Anker zu dem jeweiligen Stirnabschnitt fließt, bevorzugt maximal 20%.

Der Befestigungsbereich 21 bzw. 31 ist plattenförmig, insbesondere ringplattenförmig ausgestaltet. Weiterhin kann der Befestigungsbereich Aussparungen aufweisen, um das weichmagnetische Material im Bereich des Befestigungsbereiches zu verringern. In einer möglichen Ausgestaltung kann der Befestigungsbereich 31 nach außen hin weniger Material aufweisen, beispielsweise indem er nach außen hin dünner ausgestaltet ist, um so eine möglichst gleichmäßige Sättigung in diesem Bereich zu bewirken.

Der erste und der zweite Aspekt sind im Ausführungsbeispiel kombiniert verwirklicht, d.h. der Hubmagnet weist einen konstruktiven Aufbau gemäß dem zweiten Aspekt sowie unterschiedliche Federn gemäß dem ersten Aspekt auf. Auch die übrigen oben beschriebenen Aspekte sind in Kombination verwirklicht.

Jeder einzelne der oben beschriebenen Aspekte eines Hubmagneten gemäß der vorliegenden Erfindung kann jedoch auch unabhängig von den anderen Aspekten verwirklicht werden. Die zu den einzelnen Aspekten beschriebenen Merkmale bilden die vorliegende Erfindung daher jeweils auch unabhängig von den zu den anderen Aspekten beschriebenen Merkmalen weiter. Weiterhin können auch nur einige der Aspekte miteinander kombiniert werden, wobei die vorliegende Erfindung sämtliche Kombination der oben beschriebenen Aspekte umfasst.

Insbesondere kann der konstruktive Aufbau gemäß dem zweiten Aspekt auch mit identischen Federn und/oder identischen magnetischen Haltekräften eingesetzt werden.

Weiterhin kann die Ausgestaltung mit unterschiedlichen Federn und/oder unterschiedlichen magnetischen Haltekräften und/oder einer asymmetrische Raststelle auch bei einer anderen konstruktiven Ausgestaltung des Haltemagneten eingesetzt werden.

Beispielsweise könnte statt den beiden außen liegenden Permanentmagnete PM1 und PM2 ein einzelner im Bereich des Magnetkreisabschnitts 18 angeordneter Permanentmagnet eingesetzt werden, welcher in beiden Hubendlagen die Hülse 15 und den Anker 40 unter eine magnetische Spannung setzt.

Weiterhin sind auch andere konstruktive Ausgestaltungen des Stators denkbar, beispielsweise mit zwei getrennten weichmagnetischen Abschnitten, zwischen welchen zumindest Teile des Ankers angeordnet sind, bspw. in Form einer Ankerplatte. Weiterhin alternativ oder zusätzlich sind auch Ausgestaltungen mit außen liegenden Ankerplatten und/oder mit am Anker angeordneten Permanentmagneten denkbar.

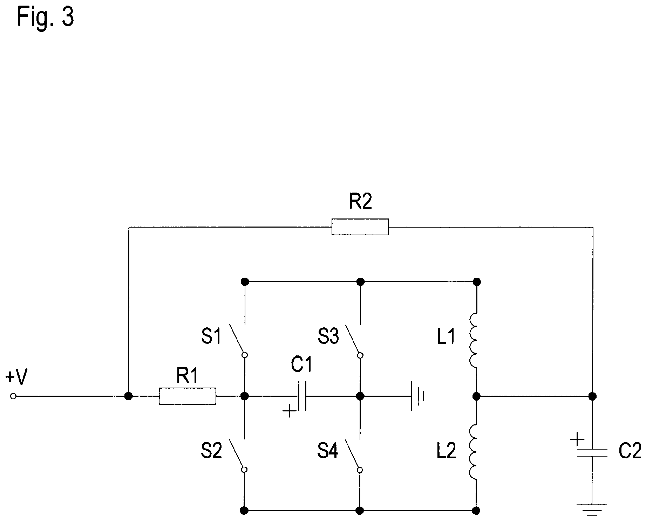

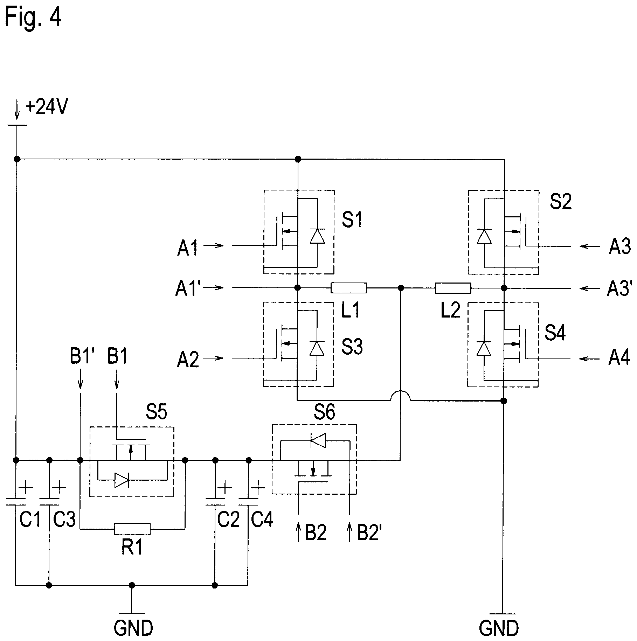

Mögliche Ausgestaltungen einer Steuerung zur Ansteuerung eines bistabilen Hubmagneten im Rahmen der vorliegenden Erfindung sind in Fig. 3 und 4 gezeigt. Sie können zur Ansteuerung beliebiger bistabiler Hubmagnete, welche mindestens zwei Spulen L1 und L2 aufweisen, eingesetzt werden. Besonders bevorzugt kommt die Steuerung bei bistabilen Hubmagneten zum Einsatz, bei welchen der Anker im unbestromten Fall permanentmagnetisch in der ersten und zweiten Hublage gehalten wird, wobei durch Bestromen der ersten Spule L1 und/oder der zweiten Spule L2 mit einer ersten Stromrichtung der Hubmagnet aus der ersten Hubendlage, und durch Bestromung der zweiten Spule L2 und/oder der ersten Spule L1 mit einer zweiten Stromrichtung der Anker aus der zweiten Hubendlage gelöst wird.

Besonders bevorzugt weist der Hubmagnet ein Federsystem mit einer ersten und einer zweiten Feder auf, wobei die erste Feder in der ersten Hubendlage auf den Anker eine Kraft in Richtung auf die Hubmittellage ausübt, und die zweite Feder in der zweiten Hubendlage eine Kraft auf den Anker in Richtung auf die Hubmittellage ausübt. Durch Bestromen mindestens der ersten Spule L1 mit einer zweiten Stromrichtung kann der Hubmagnet entgegen der Federkraft der ersten Feder in die erste Hubendlage gezogen werden, und durch Bestromung mindestens der zweiten Spule L2 mit einer zweiten Stromrichtung kann der Anker in die zweite Hubendlage gezogen werden.

Der Stator und der Anker können in der jeweiligen Hubendlage einen magnetischen Teilkreis bilden, welcher die jeweilige Spule L1 bzw. L2 umgibt, so dass ein Bestromen der jeweiligen Spule mit der ersten Stromrichtung die permanentmagnetische Haltekraft abschwächt.

Die Steuerungen können besonders bevorzugt zur Ansteuerung eines erfindungsgemäßen Hubmagneten eingesetzt werden, wie er oben beschrieben wurde, und besonderes bevorzugt zur Ansteuerung eines Hubmagneten, bei welchem ein oder mehrere der oben beschriebenen Aspekte verwirklicht sind. Weiterhin bevorzugt arbeiten die oben beschriebenen Hubmagnete gemäß der vorliegenden Erfindung so, wie dies soeben beschrieben wurde.

Beiden Ausführungsbeispielen der Steuerung ist gemeinsam, dass die Bestromung der Spulen L1 und L2 über ein oder mehrere Energiespeicher C1, C2 erfolgt, welche über Schalter S1 bis S4 über die Spulen L1 und L2 entladen werden. Bei den Energiespeichern handelt es sich im Ausführungsbeispiel um Kondensatoren, insbesondere um Elektrolytkondensatoren. Hierzu wird im Ausführungsbeispiel eine durch die Schalter S1 bis S4 gebildete Vollbrücke eingesetzt, um die Richtung, in welcher die Entladung über die Spulen erfolgt, frei wählen zu können.

Beiden Ausführungsbeispielen ist weiterhin gemein, dass mindestens ein erster Energiespeicher C1 über die in Reihe geschalteten Spulen L1 und L2 entladen werden kann. Mindestens ein zweiter Energiespeicher C2 kann dagegen über nur eine der beiden Spulen L1 oder L2 entladen werden. Hierfür kann der zweite Energiespeicher C2 mit dem Mittelabgriff zwischen den beiden Spulen L1 und L2 verbunden werden oder verbunden sein. Über welche der beiden Spulen L1 oder L2 die jeweilige Entladung erfolgt, wird über die Vollbrücke bestimmt, welche sowohl zur Ansteuerung der Entladungsrichtung des ersten Energiespeichers C1, als auch zur Ansteuerung der Entladung des zweiten Energiespeichers C2 über die erste Spule L1 oder die zweite Spule L2 genutzt wird.

Bei dem in Fig. 3 gezeigten Ausführungsbeispiel steht der Energiespeicher C2 ständig mit dem Mittelabgriff zwischen den beiden Spulen in Verbindung. Wird daher die Entladung über die Vollbrücke freigeschaltet, entladen sich gleichzeitig der erste Energiespeicher in Reihe über die beiden Spulen L1 und L2, und der zweite Energiespeicher C2 über eine der beiden Spulen L1 oder L2.

Bei dem in Fig. 4 gezeigten Ausführungsbeispiel steht der zweite Energiespeicher C2 dagegen schaltbar mit dem Mittelabgriff zwischen den beiden Spulen L1 und L2 in Verbindung, und zwar über den Schalter S6. Über einen weiteren Schalter S5 kann der zweite Energiespeicher C2 dagegen mit dem ersten Energiespeicher C1 parallel geschaltet werden.

Die Schaltung in Fig. 4 kann in einen ersten Betriebsmodus beide Energiespeicher C1 und C2 in Reihe über die beiden Spulen L1 und L2 entladen. In einem zweiten Betriebsmodus wird dagegen nur der erste Energiespeicher C1 in Reihe über die Spulen L1 und L2 entladen, der zweite Energiespeicher C2 dagegen über eine der beiden Spulen L1 oder L2. Bevorzugt wird im zweiten Betriebsmodus der zweite Energiespeicher C2 mit einem zeitlichen Versatz zu der Vollbrücke geschaltet, d.h. der zweite Energiespeicher C2 wird erst mit dem Mittelabgriff zwischen den beiden Spulen verbunden, nachdem die Vollbrücke bereits eine Verbindung zwischen dem ersten Energiespeicher und den beiden Spulen hergestellt und den Stromkreis zur Entladung von C1 geschlossen hat. Bevorzugt wird der zweite Energiespeicher C2 jedoch so frühzeitig zugeschaltet, dass die Stellbewegung noch nicht eingesetzt hat.

Die Entladung des zweiten Energiespeichers C2 über den Mittelabgriff führt dazu, dass dieser nur über eine der beiden Spulen L1 oder L2 entladen wird. Zum einen steht hierdurch mehr Energie für diese Spule zur Verfügung. Als weiterer Vorteil ergibt sich, dass der Strom durch die andere Spule begrenzt wird und hierdurch eine Überkompensation vermieden wird.

Bevorzugt ist die Schaltung so ausgestaltet, dass der erste Betriebsmodus eingesetzt wird, um den Hubmagneten in eine erste Richtung zu bewegen, und der zweite Betriebsmodus, um den Hubmagneten in eine zweite Richtung zu bewegen. Insbesondere kann der erste Betriebsmodus, bei welchem die beiden Energiespeicher C1 und C2 parallel geschaltet sind und beide über die in Reihe geschalteten Spulen L1 und L2 entladen werden, für eine Bewegung von der ersten Hubendlage in die zweite Hubendlage eingesetzt werden, d. h. zum Ausfahren des Nocken. Für eine Bewegung von der zweiten Hubendlage in die erste Hubendlage, d.h. zum Einfahren des Nocken, kommt dagegen bevorzugt der zweite Betriebsmodus zum Einsatz, bei welchem der zweite Energiespeicher C2 parallel zu Energiespeicher C1 über eine der beiden Spulen L1 und L2 entladen wird, bevorzugt mit einem Zeitversatz gegenüber der Entladung des ersten Energiespeichers C1. Eine solche unterschiedliche Ansteuerung der beiden Bewegungsrichtungen ist insbesondere dann von Vorteil, wenn der Hubmagnet eine asymmetrische Kennlinie und/oder unterschiedliche Federn aufweist.

Bevorzugt sind die Schalter der Vollbrücke sowie die Schalter zum Umschalten zwischen dem ersten und dem zweiten Betriebsmodus jeweils als Halbleiterschalter, insbesondere in Form eines MOSFET ausgebildet.

In Fig. 4 ist dies gezeigt. Zum Ansteuern sind jeweils Steuereingänge A1 bis A4 und B1 und B2 vorgesehen, über welche eine Spannungsdifferenz gegenüber den Referenzanschlüssen A1', A3', B1' und B2' zur Ansteuerung der jeweiligen Schalters angelegt wird.

Weiterhin sind im Ausführungsbeispiel in Fig. 4 jeweils zwei erste Energiespeicher C1 und C3 und zwei zweite Energiespeicher C2 und C4 parallel geschaltet.

Bei dem in Fig. 3 gezeigten Ausführungsbeispiel erfolgt die Aufladung der Energiespeicher C1 und C2 über Wiederstände R1 und R2, mit welchen diese mit einer Spannungsversorgung +V in Verbindung stehen. Wird daher die Spannungsversorgung eingeschaltet, laden sich die Energiespeicher über die jeweiligen Widerstände.

Bevorzugt wird jedoch sowohl beim ersten, als auch beim zweiten Ausführungsbeispiel eine elektronisch geregelte Ladung der Energiespeicher vorgenommen, insbesondere mit einem konstanten Ladestrom.

Alternativ oder zusätzlich kann der Ladestrom, mit welchem die Energiespeicher geladen werden, einstellbar sein. Beispielsweise kann die Steuerung mehrere Betriebsmodi aufweisen, welche sich durch die Größe des Ladestroms unterscheiden, wobei die Steuerung bevorzugt zwischen den Betriebsmodi umschaltbar ist. Durch den Ladestrom wird die erforderliche Totzeit zwischen zwei Stellvorgängen wesentlich bestimmt. Bein einem hohen Ladestrom wird die Zeit, welche zwischen zwei Stellvorgängen notwendig ist, verkürzt. Ein niedriger Ladestrom verlängert dagegen diese Zeit. Durch die unterschiedlichen Betriebsmodi kann der Hubmagnet beispielsweise dann, wenn längere Zeiten zwischen zwei Stellvorgängen zulässig sind, mit einer Energieversorgung mit geringerer Leistung betrieben werden, ohne diese zu überlasten.

Unterschiedliche Ladeströme können bspw. durch unterschiedliche Widerstände, oder durch eine entsprechende elektronische Steuerung verwirklicht werden, bevorzugt durch Schaltregler, beispielsweise Aufwärts- oder Abwärtswandler.

Auch unabhängig von der konkreten Ausgestaltung der Steuerung, wie sie oben beschrieben wurde, wird der Hubmagnet gemäß einem weiteren Aspekt der vorliegenden Erfindung so angesteuert, dass bei einem Abschalten der Spannungsversorgung der Hubmagnet von der ersten in die zweite Hubendlage bewegt wird. Bei einem Zuschalten der Versorgungsspannung wird der Hubmagnet dagegen zurück von der zweiten Hubendlage in die erste Hubendlage bewegt.

Bevorzugt wird eine Überwachung der Versorgungsspannung vorgenommen. Beispielsweise kann ein Abfallen der Versorgungsspannung mittels einer Flankenerkennung erkannt werden. Fällt die Versorgungsspannung ab, werden die Energiespeicher über die Spule oder Spulen des Hubmagneten entladen, um den Hubmagneten von der ersten in die zweite Hubendlage zu bewegen.

Bevorzugt werden nach dem Zuschalten der Versorgungsspannung zunächst die elektrischen Energiespeicher aufgeladen, wobei die Steuerung das Erreichen einer bestimmten Schwellspannung am Energiespeicher erkennt und daraufhin den Energiespeicher über die Spule oder Spulen des Hubmagneten so entlädt, dass dieser sich von der zweiten in die erste Hubendlage bewegt.

Eine solche Ausgestaltung hat den Vorteil, dass der erfindungsgemäße Hubmagnet problemlos zum Ersatz von monostabilen Hubmagneten und/oder monostabilen Pneumatikventilen und/oder monostabiler pneumatischer Antriebe eingesetzt werden kann.

Weist der Hubmagnet wie oben beschrieben eine gegenüber der Hubmittellage versetzte Raststelle auf, wird ein solcher Betrieb besonders sicher. Denn selbst dann, wenn die Versorgungsspannung ungewollt sehr kurz nach einem Schaltvorgang, mit welchem der Hubmagnet in die erste Hubendlage verfahren wurde, ausfällt, oder sonstige Probleme an den Energiespeichern auftreten, ist ein Verfahren in die Raststelle immer noch möglich, da hierfür nur sehr wenig Energie benötigt wird. In dieser Raststelle ist der Hubmagnet jedoch bereits weitgehend zur zweiten Hubendlage hin ausgefahren.

Hierdurch wird die Sicherheit beim Einsatz eines bistabilen Hubmagneten zum Ein- und Ausfahren des Nocken erheblich erhöht.

## Patentansprüche

1. Elektromagnetischer Stopper (4) zum Stoppen und/oder Vereinzeln von auf einer kontinuierlich betriebenen Stückgut-Förderanlage geförderten Stückgut-Trägern (2) und/oder Stückgut (3),
**dadurch gekennzeichnet, dass** es umfasst:
- einen bistabilen Hubmagneten (10) mit mindestens einer Spule und mindestens einem Permanentmagneten;
- einen Nocken (6), welcher mit Hilfe des Hubmagneten (10) ein- und ausgefahren werden kann,
- einen oder mehrere elektrische Energiespeicher (9), insbesondere Kondensatoren,
- eine Steuerung (8), welche mit Hilfe von Schaltern (11) den oder die Energiespeicher (9) über die mindestens eine Spule des Hubmagneten (10) so entlädt, dass der Nocken (6) ausgefahren wird.

2. Stopper (4) nach Anspruch 1, wobei der bistabile Hubmagnet (10) zwei Hubendlagen aufweist, wobei ein Federsystem (F1, F2) vorgesehen ist, welches einen oder mehrere Anker (40) des bistabilen Hubmagneten (10) aus den Hubendlagen heraus in Richtung einer Hubmittellage vorspannt.

3. Stopper (4) nach Anspruch 2,
wobei sich die in den beiden Hubendlagen im Stopper (4) gespeicherte potentielle Energie ausschließlich der elektrischen Energie und im unbestromten Fall nicht um mehr als 50% des größeren Wertes voneinander unterscheidet, bevorzugt um nicht mehr als 25%.

4. Stopper (4) nach einem der vorangegangenen Ansprüche, wobei der bistabile Hubmagnet (10) eine asymmetrische Kennlinie aufweist, und/oder wobei die magnetische Haltekraft des Hubmagneten (10) in derjenigen Hubendlage am höchsten ist, in welcher sich der Nocken (6) des Stoppers (4) in seiner ausgefahrenen Position befindet, was bevorzugt durch eine geometrische Kennlinienbeeinflussung erreicht wird und/oder wobei die magnetische Haltekraft in einer der Hubendlagen zwischen 20% und 80% der magnetischen Haltekraft in der anderen Hubendlage beträgt, bevorzugt zwischen 30% und 70%.

5. Stopper (4) nach einem der vorangegangenen Ansprüche, wobei der Stopper (4) im unbestromten Fall eine Raststelle in einer Position aufweist, in welcher der Nocken (6) teilweise ausgefahren ist, wobei der Nocken (6) an der Raststelle bevorzugt hinreichend weit ausgefahren ist, um in der Förderanlage Stückgut-Träger (2) und/oder Stückgut (3) sicher zu stoppen und/oder wobei die Raststelle bevorzugt durch eine asymmetrische Kennlinie erreicht wird und/oder wobei die Raststelle bevorzugt gegenüber der Mitte des Hubweges versetzt ist, wobei die Raststelle weiter bevorzugt zwischen der Hubendlage, welche einer komplett ausgefahrenen Position des Nocken (6) entspricht, und der Mitte des Hubweges angeordnet ist, und/oder wobei der Abstand zwischen der Raststelle und der Mitte des Hubweges weiter bevorzugt mehr als 5 % des Hubweges beträgt, weiter bevorzugt mehr als 10 %, weiter bevorzugt mehr als 20%, und/oder wobei der Abstand zwischen der Raststelle und der Hubendlage, welche einer komplett ausgefahrenen Position des Nocken (6) entspricht, bevorzugt mehr als 2 % des Hubweges beträgt, weiter bevorzugt mehr als 5 %, weiter bevorzugt mehr als 10 %.

6. Stopper (4) nach einem der vorangegangenen Ansprüche, wobei die Steuerung (8) eine Unterbrechung und/oder ein Abschalten der Spannungsversorgung des Stoppers (4) erkennt und in Reaktion hierauf den Nocken (6) ausfährt, wobei bevorzugt das Abfallen der Versorgungsspannung mittels einer Flankenerkennung erkannt wird.

7. Stopper (4) nach einem der vorangegangenen Ansprüche, wobei die Steuerung (8) so ausgestaltet ist, dass auf ein Zuschalten der Versorgungsspannung hin der oder die elektrischen Energiespeicher (9), vorzugsweise Kondensatoren (C1, C2), aufgeladen werden, und dass das Erreichen einer bestimmten Schwellspannung am elektrischen Energiespeicher (9) von der Steuerung (8) erkannt wird, woraufhin selbige den oder die Energiespeicher (9) über den bistabilen Hubmagneten (10) so entlädt, dass der Nocken (6) eingefahren wird.

8. Stopper (4) nach einem der vorangegangenen Ansprüche, wobei der bistabile Hubmagnet (10) über eine Vollbrücke, insbesondere eine MOSFET-Vollbrücke angesteuert wird, wobei die Vollbrücke bevorzugt zwei weitere Schalter aufweist, über welche ein erster und einer zweiter Energiespeicher (C1, C2) in einem ersten Schaltzustand parallel geschaltet und in einem zweiten Schaltzustand separat entladen werden können.

9. Stopper (4) nach einem der vorangegangenen Ansprüche, wobei die Steuerung (8) mindestens einem ersten und einem zweiten elektrischem Energiespeicher (C1, C2) aufweist,
wobei der erste Energiespeicher (C1) in Serie über zwei Spulen (L1, L2) des Hubmagneten (10) entladbar ist, und wobei der zweite Energiespeicher (C2) über eine der zwei Spulen (L1, L2) des Hubmagneten (10) entladbar ist, wobei bevorzugt der zweite Energiespeicher (C2) wahlweise über eine der zwei Spulen (L1, L2) und/oder wahlweise auch in Serie über zwei Spulen (L1, L2) des Hubmagneten (10) entladbar ist, wobei die elektrische Schaltung bevorzugt so ausgestaltet ist, dass zur Ansteuerung einer ersten Bewegungsrichtung des Hubmagneten (10), insbesondere zum Ausfahren des Nocken (6), beide Energiespeicher (C1, C2) in Serie über die zwei Spulen (L1, L2) des Hubmagneten (10) entladen werden, und zur Ansteuerung einer zweiten Bewegungsrichtung des Hubmagneten (10), insbesondere zum Einfahren des Nocken (6), der erste Energiespeicher (C1) in Serie über die Spulen (L1, L2) und der zweite Energiespeicher (C2) über nur eine der zwei Spulen (L1, L2) entladen wird, wobei die Entladung des zweiten Energiespeichers (C2) bevorzugt mit einer zeitlichen Verzögerung zur Entladung des ersten Energiespeichers (C1) erfolgt, wobei das Entladen des zweiten Energiespeichers (C2) bevorzugt noch vor Eintreten des Stellvorgangs einsetzt, und/oder wobei der Hubmagnet (10) zwei Spulen (L1, L2) aufweist, welche in Serie geschaltet sind und bevorzugt eine Mittelanzapfung aufweisen, wobei bevorzugt mindestens ein erster und einer zweiter Energiespeicher (C1, C2) vorgesehen sind, wobei entlang einer ersten Bewegungsrichtung, insbesondere zum Ausfahren des Nocken (6), beide Energiespeicher (C1, C2) über die in Reihe geschalteten Spulen (L1, L2) entladen werden, während bei der umgekehrten Bewegungsrichtung, insbesondere zum Einfahren des Nocken (6), zunächst der erste Energiespeicher (C1) über die in Reihe geschalteten Spulen (L1, L2) entladen wird, und mit einer zeitlichen Verzögerung der zweite Energiespeicher (C2) über die Mittelanzapfung beider Spulen (L1, L2) entladen wird, wobei das Entladen des zweiten Energiespeichers (C2) bevorzugt noch vor Eintreten des Stellvorgangs einsetzt.

10. Stopper (4) nach einem der vorangegangenen Ansprüche, mit Mitteln zur Positionserfassung des Stoppers (4), wobei die Steuerung (8) bevorzugt die mittels der Mittel zur Positionserfassung gewonnene Lageinformation beim Ansteuern des bistabilen Hubmagneten (10) berücksichtigt, wobei die Steuerung (8) bevorzugt einen Mikrocontroller aufweist, welcher mit den Mitteln zur Positionserfassung verbunden ist, und/oder wobei der Nocken (6) einen Dämpfungsmechanismus aufweist und/oder mit einem solchen verbunden ist.

11. Stopper (4) nach einem der vorangegangenen Ansprüche mit einem Federsystem mit einer ersten Feder (F1), welche in einer ersten Hubendlage auf den oder die Anker (40) des Hubmagneten (10) eine Kraft in Richtung die Hubmittellage ausübt, sowie mit einer zweiten Feder (F2), welche in einer zweiten Hubendlage auf den oder die Anker (40) eine Kraft in Richtung die Hubmittellage ausübt, wobei der oder die Anker (40) im stromlosen Fall in beiden Hubendlagen entgegen der Federkraft permanentmagnetisch gehalten werden, wobei die erste und die zweite Feder (F1, F2) unterschiedllich lange Federwege aufweisen und/oder in der jeweiligen Hubendlage unterschiedlich große Kräfte auf den oder die Anker (40) ausüben und/oder unterschiedlich große Federraten aufweisen,
wobei die zweite Hubendlage bevorzugt der komplett ausgefahrenen Position des Nocken (6) entspricht und die erste Hubendlage der komplett eingefahrenen Position,
wobei bevorzugt der Federweg der ersten Feder (F1) größer als der Federweg der zweiten Feder (F2) ist und die zweite Feder (F2) in der zweiten Hubendlage eine größere Kraft auf den oder die Anker (40) ausübt als die erste Feder (F1) in der ersten Hubendlage auf den oder die Anker (40) ausübt,
und/oder wobei bevorzugt der Federweg der ersten Feder (F1) größer als der Federweg der zweiten Feder (F2) ist und die Federrate der zweiten Feder (F2) in der zweiten Hubendlage größer ist als die Federrate der ersten Feder (F1) in der ersten Hubendlage.

12. Stopper (4) nach einem der Ansprüche 2 bis 11,
wobei der Stator und der oder die Anker (40) in einer der Hubendlagen und bevorzugt in der ersten Hubendlage eine geometrische Kennlinienbeeinflussung aufweisen, insbesondere einen nicht in einer Ebene senkrecht zur Achse (50) des Hubmagneten (10) verlaufenden Arbeits-Luftspalt, insbesondere einen konisch verlaufenden Arbeits-Luftspalt, wobei der Stator und der oder die Anker (40) in der anderen Hubendlage und bevorzugt in der zweiten Hubendlage eine schwächere oder keine geometrische Kennlinienbeeinflussung aufweisen,
und/oder wobei sich die Differenz zwischen dem Betrag der magnetischen Haltekraft und dem Betrag der Kraft, welche die jeweilige Feder (F1, F2) aufbringt, in den beiden Hubendlagen um maximal 50% des größeren Wertes unterscheidet.

13. Stopper (4) nach einem der vorangegangenen Ansprüche, wobei der Hubmagnet (10) einen Stator (4), einen oder mehrere Anker (40), mindestens eine Spule (L1, L2), und mindestens einen Permanentmagneten (PM1, PM2) aufweist, wobei ein Federsystem mit einer ersten Feder (F1), welche in einer ersten Hubendlage auf den oder die Anker (40) eine Kraft in Richtung die Hubmittellage ausübt, sowie mit einer zweiten Feder (F2), welche in einer zweiten Hubendlage auf den oder die Anker (40) eine Kraft in Richtung die Hubmittellage ausübt, vorgesehen ist, wobei der oder die Anker (40) im stromlosen Fall in beiden Hubendlagen entgegen der Federkraft permanentmagnetisch gehalten werden,
wobei der Stator eine weichmagnetische Hülse (15) und einen ersten und zweiten weichmagnetischen Stirnabschnitt (20, 30) aufweist, welche ein Gehäuse bilden, in welchem der Anker (40) verschieblich angeordnet ist, wobei zwischen dem Anker (40) und dem ersten Stirnabschnitt (20) mindestens ein erster Arbeitsluftspalt und zwischen dem Anker (40) und dem zweiten Stirnabschnitt (30) mindestens ein zweiter Arbeitsluftspalt vorgesehen ist; wobei am Stator mindestens ein Permanentmagnet und mindestens eine erste und eine zweite Spule angeordnet sind,
wobei der Anker (40) in der ersten Hubendlage mit der Hülse (15) und dem ersten Stirnabschnitt (20) einen ersten magnetischen Teilkreis bildet, welcher zumindest die erste Spule (L1) umgibt, während der oder die Arbeitsluftspalte mit dem zweiten Stirnabschnitt (30) maximal geöffnet sind;
und wobei der Anker (40) in der zweiten Hubendlage mit der Hülse (15) und dem zweiten Stirnabschnitt (30) einen zweiten magnetischen Teilkreis bildet, welcher zumindest die zweite Spule (L2) umgibt, während der oder die Arbeitsluftspalte mit dem ersten Stirnabschnitt (20) maximal geöffnet sind, wobei bevorzugt mindestens ein erster und ein zweiter Permanentmagnet (PM1, PM2) vorgesehen sind, wobei die erste und die zweite Spule (L1, L2) in axialer Richtung zwischen dem ersten und dem zweiten Permanentmagneten (PM1, PM2) angeordnet sind, wobei der erste Permanentmagnet (PM1) die Hülse (15) und den ersten Stirnabschnitt (20) und der zweite Permanentmagnet (PM2) die Hülse (15) und den zweiten Stirnabschnitt (30) unter eine magnetische Spannung setzen.

14. Stückgut-Förderanlage mit einer kontinuierlich betriebenen Stückgut-Förderstrecke (1) zum Fördern von Stückgut (3) und/oder Stückgut-Trägern (2), mit einem oder mehreren Stoppern (4) nach einem der vorangegangenen Ansprüche zum Stoppen und/oder Vereinzeln des Stückgutes (3) und/oder der Stückgut-Träger (2).

## Claims

1. Electromagnetic stopper (4) for stopping and/or for separating cargo carriers (2) and/or cargo (3) conveyed on a continuously operated cargo conveyor system, **characterized in that** it comprises:
- a bistable lifting solenoid (10) having at least one coil and at least one permanent magnet;
- a cam (6) that can be retracted and extended with the aid of the lifting solenoid (10);
- one or more electrical energy stores (9), in particular capacitors;
- a control (8) that discharges the energy store (9) or the energy stores via the at least one coil of the lifting solenoid (10) with the aid of switches (11) such that the cam (6) is extended.

2. Stopper (4) in accordance with claim 1, wherein the bistable lifting solenoid (10) comprises two end of stroke positions, wherein a spring system (F1, F2) is provided that preloads one or more armatures (40) of the bistable lifting solenoid (10) out of the end of stroke positions in the direction of a center of stroke position.

3. Stopper (4) in accordance with claim 2, wherein the potential energy, excluding the electrical energy and in the currentless case, stored in the stopper (4) in the two end of stroke positions does not differ by more than 50% of the greater value, preferably by no more than 25%.

4. Stopper (4) in accordance with one of the preceding claims, wherein the bistable lifting solenoid (10) has an asymmetrical characteristic; and/or wherein the magnetic holding force of the lifting solenoid (10) is the highest in that end of stroke position in which the cam (6) of the stopper (4) is in its extended position, which is preferably achieved by a geometrical characteristic influence, and/or wherein the magnetic holding force in one of the end of stroke positions amounts to between 20% and 80% of the magnetic holding force in the other end of stroke position, preferably between 30% and 70%.

5. Stopper (4) in accordance with one of the preceding claims, wherein the stopper (4) has a resting point in one position in the currentless case in which the cam (6) is partly extended, wherein the cam (6) preferably is extended sufficiently far at the resting point to reliably stop cargo carriers (2) and/or cargo (3) in the conveyor system, and/or wherein the resting point is preferably reached by an asymmetrical characteristic; and/or wherein the resting point is preferably offset with respect to the center of the stroke distance, wherein the resting point further preferably is arranged between the end of stroke position that corresponds to a completely extended position of the cam (6) and the center of the stroke distance, and/or wherein the distance between the resting point and the center of the stroke distance further preferably amounts to more than 5% of the stroke distance, further preferably more than 10%, further preferably more than 20%; and/or wherein the distance between the resting point and the end of stroke position that corresponds to a completely extended position of the cam (6) preferably amounts to more than 2% of the stroke distance, further preferably more than 5%, further preferably more than 10%.

6. Stopper (4) in accordance with one of the preceding claims, wherein the control (8) recognizes an interruption and/or a switching off of the voltage supply of the stopper (4) and extends the cam (6) in response thereto, with the drop in the supply voltage preferably being recognized by means of a flank recognition.

7. Stopper (4) in accordance with one of the preceding claims, wherein the control (8) is configured such that the electrical energy store (9) or stores, preferably capacitors (C1, C2), are charged in response to a switching on of the supply voltage and such that the reaching of a specific threshold voltage at the electrical energy store (9) is recognized by the control (8), whereupon the latter discharges the electrical energy store (9) or stores via the bistable lifting solenoid (10) such that the cam (6) is retracted.

8. Stopper (4) in accordance with one of the preceding claims, wherein the bistable lifting solenoid (10) is controlled via a full bridge, in particular a MOSFET full bridge, wherein the full bridge preferably comprises two further switches via which a first and second energy store (C1, C2) can be connected in parallel in a first switching state and can be separately discharged in a second switching state.

9. Stopper (4) in accordance with one of the preceding claims, wherein control (8) comprises at least one first and one second energy store (C1, C2), wherein the first energy store (C21) can be discharged in series via two coils (L1, L2) of the lifting solenoid (10), and wherein the second energy store (C2) can be discharged via one of the two coils (L1, L2) of the lifting solenoid (10), wherein the second energy store preferably is selectively dischargeable by one of the two coils (L1, L2) and/or selectively also in series by two coils (L1, L2) of the lifting solenoid (10), wherein the electrical circuit preferably is configured such that for the control of a first direction of movement of the lifting solenoid (10), in particular to extend the cam (6), both energy stores (C1, C2) are discharged in series via the two coils (L1, L2) of the lifting solenoid (10), and for a control of a second direction of movement of the lifting solenoid (10), in particular to retract the cam (6), the first energy store is discharged in series via the coils (L1, L2) and the second energy store (C2) is discharged via only one of the two coils (L1, L2), wherein the discharge of the second energy store (C2) preferably takes place with a time delay relative to the discharge of the first energy store (C1), wherein the discharge of the second energy store (C2) preferably starts even before the occurrence of the adjustment process, and/or wherein the lifting solenoid (10) comprises two coils (L1, L2) that are connected in series and that preferably have a central tapping, wherein at least one first energy store (C1) and one second energy store (C2) are preferably provided, wherein both energy stores are discharged via the coils (L1, L2) connected in series along a first direction of movement, in particular to extend the cam (6), while on the reverse direction of movement, in particular to retract the cam (6), the first energy store (C1) is first discharged via the coils (L1, L2) connected in series and the second energy store (C2) is discharged with a time delay by the central tapping of both coils (L1, L2), wherein the discharge of the second energy store (C2) preferably starts even before the occurrence of the adjustment process.

10. Stopper (4) in accordance with one of the preceding claims, having means for the position detection of the stopper (4), wherein the control (8) preferably takes account of the location information acquired by means of the means for position detection in the control of the bistable lifting solenoid (10), wherein the control (8) preferably comprises a microcontroller that is connected to the means for position detection; and/or wherein the cam (6) comprises a damping mechanism and/or is connected to same.

11. Stopper (4) in accordance with one of the preceding claims, comprising a spring system having a first spring (F1) that exerts a force on the armature (40) or armatures of the lifting solenoid (10) in the direction of the center of stroke position in a first end of stroke position and having a second spring (F2) that exerts a force on the armature (40) or armatures in the direction of the center of stroke position in a second end of stroke position, wherein the armature (40) or armatures are held in a permanent magnetic manner against the spring force in both end of stroke positions in the currentless case, wherein the first and second spring (F1, F2) have spring travels of different lengths and/or exert forces of different amounts on the armature (40) or armatures in the respective end of stroke position and/or have spring rates of different amounts;
wherein the second end of stroke position preferably corresponds to the completely extended position of the cam (6) and the first end of stroke position corresponds to the completely retracted position,
wherein the spring travel of the first spring (F1) is preferably greater than the spring travel of the second spring (F2) and the second spring (F2) exerts a greater force on the armature (40) or armatures in the second end of stroke position than the first spring (F1) exerts on the on the armature (40) or armatures in the first end of stroke position,
and/or wherein the spring travel of the first spring (F1) is preferably greater than the spring travel of the second spring (F2) and the spring rate of the second spring (F2) in the second end of stroke position is preferably greater than the spring rate of the first spring (F1) in the first end of stroke position.

12. Stopper (4) in accordance with one of claims 2 to 11, wherein the stator and the armature (40) or armatures have a geometrical characteristic influence in one of the end of stroke positions, and preferably in the first end of stroke position, in particular a working air gap, in particular a conically extending working air gap, not extending in a plane perpendicular to the axle (50) of the lifting solenoid (10), wherein the stator and the armature (40) or armatures in the other end of stroke position, and preferably in the second end of stroke position, have a weaker or no geometrical characteristic influence;
and/or wherein the difference between the amount of the magnetic holding force and the amount of the force that the respective spring (F1, F2) applies differs by a maximum of 50% of the larger value in both end of stroke positions.

13. Stopper (4) in accordance with one of the preceding claims, wherein the lifting solenoid (10) comprises a stator (4), one or more armatures (40), at least one coil (L1, L2) and at least one permanent magnet (PM1, PM2), wherein a spring system is provided having a first spring (F1) that exerts a force on the armature (40) or armatures in the direction of the center of stroke position in a first end of stroke position, and having a second spring (F2) that exerts a force on the armature (40) or armatures in the direction of the center of stroke position in a second end of stroke position, wherein the armature (40) or armatures are held in a permanent magnetic manner against the spring force in both end of stroke positions in the currentless case;
wherein the stator comprises a soft magnetic sleeve (15) and first and second soft magnetic front sections (20, 30) that form a housing in which the armature (40) is displaceably arranged;
wherein at least one first working air gap is provided between the armature (40) and the first front section (20) and at least one second working air gap is provided between the armature (40) and the second front section (30); wherein at least one permanent magnet and at least one first coil and one second coil are arranged at the stator;
wherein the armature (40) forms a first magnetic sub-circuit with the sleeve (15) and the first front section (20) in the first end of stroke position, said first magnetic sub-circuit at least surrounding the first coil (L1), while the working air gap or gaps is/are opened to a maximum with the second front section;
and wherein the armature (40) forms a second magnetic sub-circuit with the sleeve (15) and the second front section (30) in the second end of stroke position, said second magnetic sub-circuit at least surrounding the second coil (L2), while the working air gap or gaps is/are opened to a maximum with the first front section (20),
wherein at least one first permanent magnet (PM1) and one second permanent magnet (PM2) are preferably provided, wherein the first and second coils (L1, L2) are arranged between the first and second permanent magnets (PM1, PM2) in the axial direction, wherein the first permanent magnet (PM1) puts the sleeve (15) and the first front section (20) under a magnetic voltage and the second permanent magnet (PM2) puts the sleeve (15) and the second front section (30) under a magnetic voltage.

14. Cargo conveyor system having a continuously operated cargo conveyor route (1) for conveying cargo (3) and/or cargo carriers (2), having one or more stoppers (4) in accordance with one of the preceding claims for stopping and/or separating the cargo (3) and/or the cargo carriers (2).

## Revendications

1. Système d'arrêt (4) électromagnétique pour arrêter et/ou isoler des supports de marchandises de détail (2) et/ou des marchandises de détail (3) transportés sur une installation de transport de marchandises de détail fonctionnant en continu, **caractérisé en ce qu'**il comprend :
- un aimant de levage (10) bistable avec au moins une bobine et au moins un aimant permanent ;
- une came (6), laquelle peut être rentrée et sortie à l'aide de l'aimant de levage (10),
- un ou plusieurs accumulateurs d'énergie (9) électriques, en particulier des condensateurs,
- une commande (8), laquelle décharge, à l'aide de commutateurs (11), l'accumulateur ou les accumulateurs d'énergie (9) par l'intermédiaire de l'au moins une bobine de l'aimant de levage (10) de telle sorte que la came (6) est sortie.

2. Système d'arrêt (4) selon la revendication 1, dans lequel l'aimant de levage (10) bistable présente deux positions finales de levage, dans lequel un système à ressorts (F1, F2) est prévu, lequel précontraint un ou plusieurs ancrages (40) de l'aimant de levage (10) bistable depuis les positions finales de levage en direction d'une position centrale de levage.

3. Système d'arrêt (4) selon la revendication 2, dans lequel l'énergie potentielle accumulée dans le système d'arrêt (4) dans les deux positions finales de levage ne se distingue pas l'une de l'autre, à l'exclusion de l'énergie électrique, et en l'absence de courant, de plus de 50 % de la valeur la plus importante, de manière préférée de plus de 25 %.

4. Système d'arrêt (4) selon l'une quelconque des revendications précédentes, dans lequel l'aimant de levage (10) bistable présente une courbe caractéristique asymétrique, et/ou dans lequel la force de maintien magnétique de l'aimant de levage (10) est la plus élevée dans la position finale de levage, dans laquelle précisément se trouve la came (6) du système d'arrêt (4) dans sa position sortie, ce qui est obtenu de manière préférée par une incidence géométrique sur la courbe caractéristique, et/ou dans lequel la force de maintien magnétique dans l'une des positions finales de levage est comprise entre 20 % et 80 % de la force de maintien magnétique dans l'autre position finale de levage, de manière préférée entre 30 % et 70 %.

5. Système d'arrêt (4) selon l'une quelconque des revendications précédentes, dans lequel le système d'arrêt (4) présente, en l'absence de courant, un point d'enclenchement dans une position dans laquelle la came (6) est sortie en partie, dans lequel la came (6) est sortie de manière préférée suffisamment loin sur le point d'enclenchement pour arrêter en toute sécurité des supports de marchandises de détail (2) et/ou des marchandises de détail (3) dans l'installation de transport, et/ou dans lequel le point d'enclenchement est obtenu de manière préférée par une courbe caractéristique asymétrique et/ou dans lequel le point d'enclenchement est décalé de manière préférée par rapport au centre de la course de levage, dans lequel le point d'enclenchement est disposé par ailleurs de manière préférée entre la position finale de levage, laquelle correspond à une position totalement sortie de la came (6), et le milieu de la course de levage, et/ou dans lequel la distance entre le point d'enclenchement et le milieu de la course de levage est par ailleurs de manière préférée supérieure à 5 % de la course de levage, par ailleurs de manière préférée est supérieure à 10 %, par ailleurs de manière préférée est supérieure à 20 %, et/ou dans lequel la distance entre le point d'enclenchement et la position finale de levage, laquelle correspond à une position totalement sortie de la came (6), est de manière préférée supérieure à 2 % de la course de levage, par ailleurs de manière préférée est supérieure à 5 %, par ailleurs de manière préférée est supérieure à 10 %.

6. Système d'arrêt (4) selon l'une quelconque des revendications précédentes, dans lequel la commande (8) identifie une interruption et/ou une désactivation de l'alimentation en tension du système d'arrêt (4) et sort, en réponse, la came (6), dans lequel de manière préférée la baisse de la tension d'alimentation est identifiée au moyen d'un système d'identification de flancs.

7. Système d'arrêt (4) selon l'une quelconque des revendications précédentes, dans lequel la commande (8) est configurée de telle sorte que l'accumulateur ou les accumulateurs d'énergie (9) électriques, de préférence les condensateurs (C1, C2), sont chargés sur une activation de la tension d'alimentation, et que l'obtention d'une tension de seuil définie sur l'accumulateur d'énergie (9) électrique est identifiée par la commande (8), cette dernière déchargeant par la suite l'accumulateur ou les accumulateurs d'énergie (9) par l'intermédiaire de l'aimant de levage (10) bistable de telle sorte que la came (6) est rentrée.

8. Système d'arrêt (4) selon l'une quelconque des revendications précédentes, dans lequel l'aimant de levage (10) bistable est piloté par l'intermédiaire d'un pont intégral, en particulier d'un pont intégral MOSFET, dans lequel le pont intégral présente de manière préférée deux autres commutateurs, par l'intermédiaire desquels un premier et un deuxième accumulateur d'énergie (C1, C2) peuvent être commutés en parallèle dans un premier état de commutation et peuvent être déchargés séparément dans un deuxième état de commutation.

9. Système d'arrêt (4) selon l'une quelconque des revendications précédentes, dans lequel la commande (8) présente au moins un premier et un deuxième accumulateur d'énergie (C1, C2) électrique, dans lequel le premier accumulateur d'énergie (C1) peut être déchargé en série par l'intermédiaire de deux bobines (L1, L2) de l'aimant de levage (10), et dans lequel le deuxième accumulateur d'énergie (C2) peut être déchargé par l'intermédiaire d'une des deux bobines (L1, L2) de l'aimant de levage (10), dans lequel de manière préférée le deuxième accumulateur d'énergie (C2) peut être déchargé au choix par l'intermédiaire d'une des deux bobines (L1, L2) et/ou au choix également en série par l'intermédiaire de deux bobines (L1, L2) de l'aimant de levage (10), dans lequel la commutation électrique est configurée de manière préférée de telle sorte que pour piloter une première direction de déplacement de l'aimant de levage (10), en particulier pour faire sortie la came (6), deux accumulateurs d'énergie (C1, C2) sont déchargés en série par l'intermédiaire des deux bobines (L1, L2) de l'aimant de levage (10) et que pour piloter une deuxième direction de déplacement de l'aimant de levage (10), en particulier pour faire rentrer la came (6), le premier accumulateur d'énergie (C1) est déchargé en série par l'intermédiaire des bobines (L1, L2) et le deuxième accumulateur d'énergie (C2) est déchargé par l'intermédiaire de seulement une des deux bobines (L1, L2), dans lequel le déchargement du deuxième accumulateur d'énergie (C2) est effectué de manière préférée avec un décalage temporel pour le déchargement du premier accumulateur d'énergie (C1), dans lequel le déchargement du deuxième accumulateur d'énergie (C2) commence de manière préférée encore avant la survenue de l'opération de réglage, et/ou dans lequel l'aimant de levage (10) présente deux bobines (L1, L2), lesquelles sont commutées en série et présentent de manière préférée une prise centrale, dans lequel de manière préférée au moins un premier et un deuxième accumulateur d'énergie (C1, C2) sont prévus, dans lequel les deux accumulateurs d'énergie (C1, C2) sont déchargés par l'intermédiaire des bobines (L1, L2) commutées en série le long d'une première direction de déplacement, en particulier pour faire sortie la came (6), tandis que dans la direction de déplacement inverse, en particulier pour faire rentrer la came (6), d'abord le premier accumulateur d'énergie (C1) est déchargé par l'intermédiaire des bobines (L1, L2) commutées en série, et avec un décalage temporel, le deuxième accumulateur d'énergie (C2) est déchargé par l'intermédiaire de la prise centrale des deux bobines (L1, L2), dans lequel le déchargement du deuxième accumulateur d'énergie (C2) commence de manière préférée encore avant la survenue de l'opération de réglage.

10. Système d'arrêt (4) selon l'une quelconque des revendications précédentes, avec des moyens de détection de position du système d'arrêt (4), dans lequel la commande (8) tient compte lors du pilotage de l'aimant de levage (10) bistable de manière préférée de l'information de localisation obtenue au moyen des moyens de détection de position, dans lequel la commande (8) présente de manière préférée un microcontrôleur, lequel est relié aux moyens de détection de position, et/ou dans lequel la came (6) présente un mécanisme d'amortissement et/ou est reliée à un mécanisme de ce type.

11. Système d'arrêt (4) selon l'une quelconque des revendications précédentes avec un système à ressorts avec un premier ressort (F1), lequel exerce, dans une première position finale de levage, sur l'ancrage ou les ancrages (40) de l'aimant de levage (10), une force en direction de la position centrale de levage, ainsi qu'avec un deuxième ressort (F2), lequel exerce, dans une deuxième position finale de levage, sur l'ancrage ou les ancrages (40), une force en direction de la position centrale de levage, dans lequel l'ancrage ou les ancrages (40) sont, en l'absence de courant, maintenus par aimants permanents à l'encontre de la force de ressort dans les deux positions finales de levage, dans lequel le premier et le deuxième ressort (F1, F2) présentent des courses de ressort de longueur différente et/ou exercent, dans la position finale de levage respective, des forces d'importance différente sur l'ancrage ou les ancrages (40) et/ou présentent des constantes de rappel d'importance différente,
dans lequel la deuxième position finale de levage correspond de manière préférée à la position totalement sortie de la came (6) et la première position finale de levage à la position totalement rentrée,
dans lequel de manière préférée la course de ressort du premier ressort (F1) est plus grande que la course de ressort du deuxième ressort (F2) et le deuxième ressort (F2) exerce, dans la deuxième position finale de levage, une force plus importante sur l'ancrage ou les ancrages (40) que celle que le premier ressort (F1) exerce sur l'ancrage ou les ancrages (40) dans la première position finale de levage,
et/ou dans lequel de manière préférée la course de ressort du premier ressort (F1) est plus importante que la course de ressort du deuxième ressort (F2) et la constante de rappel du deuxième ressort (F2) dans la deuxième position finale de levage est plus importante que la constante de rappel du premier ressort (F1) dans la première position finale de course.

12. Système d'arrêt (4) selon l'une quelconque des revendications 2 à 11, dans lequel le stator et l'ancrage ou les ancrages (40) présentent, dans une des positions finales de levage et de manière préférée dans la première position finale de levage, une incidence géométrique sur la courbe caractéristique, en particulier un entrefer de travail ne s'étendant pas dans un plan de manière perpendiculaire par rapport à l'axe (50) de l'aimant de levage (10), en particulier un entrefer de travail s'étendant de manière conique, dans lequel le stator et l'ancrage ou les ancrages (40) présentent dans l'autre position finale de course et de manière préférée dans la deuxième position finale de course, une incidence géométrique sur la courbe caractéristique plus modérée voire aucune incidence,
et/ou dans lequel la différence entre la valeur de la force de maintien magnétique et la valeur de la force que le ressort (F1, F2) respectif applique, se distingue dans les deux positions finales de levage de 50 % au maximum de la valeur la plus importante.

13. Système d'arrêt (4) selon l'une quelconque des revendications précédentes, dans lequel l'aimant de levage (10) présente un stator (4), un ou plusieurs ancrages (40), au moins une bobine (L1, L2) et au moins un aimant permanent (PM1, PM2), dans lequel un système à ressorts est prévu avec un premier ressort (F1), lequel exerce une force en direction de la position centrale de levage sur l'ancrage ou les ancrages (40) dans une première position finale de levage, et avec un deuxième ressort (F2), lequel exerce une force en direction de la position centrale de levage sur l'ancrage ou les ancrages (40) dans une deuxième position finale de levage, dans lequel l'ancrage ou les ancrages (40) sont, en l'absence de courant, maintenus par aimants permanents à l'encontre de la force de ressort dans les deux positions finales de levage,
dans lequel le stator présente une douille magnétique douce (15) et un premier et un deuxième segment frontal (20, 30) magnétique doux, lesquels forment un boîtier dans lequel l'ancrage (40) est disposé de manière à pouvoir coulisser,
dans lequel au moins un premier entrefer de travail est prévu entre l'ancrage (40) et le premier segment frontal (20) et au moins un deuxième entrefer de travail est prévu entre l'ancrage (40) et le deuxième segment frontal (30) ; dans lequel au moins un aimant permanent et au moins une première et une deuxième bobine sont disposés sur le stator,
dans lequel l'ancrage (40) forme, dans la première position finale de levage, avec la douille (15) et le premier segment frontal (20), un premier circuit partiel magnétique, lequel entoure au moins la première bobine (L1), tandis que l'entrefer ou les entrefers de travail avec le deuxième segment frontal (30) sont ouverts au maximum ;
et dans lequel l'ancrage (40) forme, dans la deuxième position finale de levage, avec la douille (15) et le deuxième segment frontal (30), un deuxième circuit partiel magnétique, lequel entoure au moins la deuxième bobine (L2), tandis que l'entrefer ou les entrefers de travail avec le premier segment frontal (20) sont ouverts au maximum, dans lequel de manière préférée au moins un premier et un deuxième aimant permanent (PM1, PM2) sont prévus, dans lequel la première et la deuxième bobine (L1, L2) sont disposées dans une direction axiale entre le premier et le deuxième aimant permanent (PM1, PM2), dans lequel le premier aimant permanent (PM1) place sous une tension magnétique la douille (15) et le premier segment frontal (20) et le deuxième aimant permanent (PM2) place sous une tension magnétique la douille (15) et le deuxième segment frontal (30).

14. Installation de transport de marchandises de détail avec une ligne de transport de marchandises de détail (1) fonctionnant en continu pour transporter des marchandises de détail (3) et/ou des supports de marchandises de détail (2), avec un ou plusieurs systèmes d'arrêt (4) selon l'une quelconque des revendications précédentes, pour arrêter et/ou isoler les marchandises de détail (3) et/ou les supports de marchandises de détail (2).
